# EUROPEAN PATENT APPLICATION

(11) **EP 4 546 846 A1**
(43) Date of publication of application: **30.04.2025**
(21) Application number: 22947994.4
(22) Date of filing: 23.06.2022
(51) Int. Cl.: H04W 16/28, H04W 8/22, H04W 72/21, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/025140
(87) International publication number: WO 2023/248433

(57) **Abstract**

A terminal according to one aspect of the present disclosure includes: a control section that controls, when the terminal includes eight antenna ports, transmission of capability information related to at least one of antenna layout and antenna coherent for codebook-based physical uplink shared channel (PUSCH) transmission; and a receiving section that receives a configuration related to a sounding reference signal (SRS) resource set and SRS resources, based on the capability information. According to one aspect of the present disclosure, UL transmission using more than four antenna ports can be appropriately controlled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio **(NR),"** "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, uplink (UL) (Multi Input Multi Output (MIMO)) transmission with up to four layers is supported. For future NR, to achieve higher spectrum efficiency, it is studied to support UL transmission with the number of layers being more than four. For example, for Rel-18 NR, 6-rank maximum transmission using six antenna ports, 6-or-8-rank maximum transmission using eight antenna ports, and the like are studied.

However, study about how to determine a precoding matrix for UL transmission using more than four antenna ports has not been advanced. For example, study about a precoder for 1-to-8-layer transmission using eight antenna ports has not been advanced. Unless this is made clear, an increase in communication throughput may be suppressed.

Thus, an object of the present disclosure is to provide a terminal, a radio communication method, and a base station that enable appropriate control of UL transmission using more than four antenna ports.

### Solution to Problem

A terminal according to one aspect of the present disclosure includes: a control section that controls, when the terminal includes eight antenna ports, transmission of capability information related to at least one of antenna layout and antenna coherent for codebook-based physical uplink shared channel (PUSCH) transmission; and a receiving section that receives a configuration related to a sounding reference signal (SRS) resource set and SRS resources, based on the capability information.

### Advantageous Effects of Invention

According to one aspect of the present disclosure, UL transmission using more than four antenna ports can be appropriately controlled.

### Brief Description of Drawings

[FIG. 1] FIG. 1 is a diagram to show an example of a table of precoding matrices W for single-layer (rank 1) transmission using four antenna ports when a transform precoder is disabled, in Rel-16 NR.
[FIG. 2] FIG. 2 is a diagram to show an example of a table of precoding matrices W for 2-layer (rank 2) transmission using four antenna ports when a transform precoder is disabled, in Rel-16 NR.
[FIG. 3] FIG. 3 is a diagram to show an example of a table of precoding matrices W for 3-layer (rank 3) transmission using four antenna ports when a transform precoder is disabled, in Rel-16 NR.
[FIG. 4] FIG. 4 is a diagram to show an example of a table of precoding matrices W for 4-layer (rank 4) transmission using four antenna ports when a transform precoder is disabled, in Rel-16 NR.
[FIG. 5] FIG. 5A is a diagram to show an example of a table of precoding matrices W for single-layer (rank 1) transmission using two antenna ports, in Rel-16 NR. FIG. 5B is a diagram to show an example of a table of precoding matrices W for 2-layer (rank 2) transmission using two antenna ports when transform precoding is disabled, in Rel-16 NR.
[FIG. 6] FIG. 6 is a diagram to show an example of the correspondence between values of a precoding information and number of layers field and the numbers of layers and TPMIs in Rel-16 NR.
[FIG. 7] FIG. 7A to FIG. 7C are each a diagram to show SRI indication or second SRI indication at the time of codebook-based PUSCH transmission in Rel. 17.
[FIG. 8] FIG. 8 is a diagram to show examples of an antenna layout with eight antenna ports.
[FIG. 9] FIG. 9A to FIG. 9C are each a diagram to show a configuration example of an SRS resource set(s) and SRS resources in a first embodiment.
[FIG. 10] FIG. 10A and FIG. 10B are each a diagram to show an example of the correspondence between a DCI bit field and an SRS resource indicator when two SRS resource sets each have two four-port SRS resources.
[FIG. 11] FIG. 11A is a diagram to show the correspondence between a DCI bit field and an SRS resource indicator when two SRS resource sets each have two 4-port SRS resources. FIG. 11B is a diagram to show the correspondence between a DCI bit field and an SRS resource indicator (set number) when two SRS resource sets each have two 4-port SRS resources.
[FIG. 12] FIG. 12 is a diagram to show the correspondence between SRS resource sets and SRS resource indicator (SRI) fields in DCI, in option 2.
[FIG. 13] FIG. 13A and FIG. 13B are each a diagram to show an example of the correspondence between a DCI bit field and an SRS resource indicator when four SRS resource sets each have two two-port SRS resources.
[FIG. 14] FIG. 14A is a diagram to show the correspondence between a DCI bit field and an SRS resource indicator when four SRS resource sets each have two 2-port SRS resources. FIG. 14B is a diagram to show the correspondence between a DCI bit field and an SRS resource set indicator when four SRS resource sets each have two 2-port SRS resources.
[FIG. 15] FIG. 15 is a diagram to show the correspondence between SRS resource sets and SRS resource indicator (SRI) fields in DCI, in option 3.
[FIG. 16] FIG. 16A is a diagram to show an example of a new 3-layer precoder reusing an existing 4-port partial coherent precoder. FIG. 16B is a diagram to show an example of a 6-layer precoder using four layers from one coherent group and two layers from another coherent group.
[FIG. 17] FIG. 17A is a diagram to show an example of a 4-layer precoder using two layers from one coherent group and two layers from another coherent group. FIG. 17B is a diagram to show an example of an 8-layer precoder using four 2-layer precoders from four coherent groups.
[FIG. 18] FIG. 18 is a diagram to show examples of a legacy field/parameter and a new field/parameter in DCI and RRC.
[FIG. 19] FIG. 19 is a diagram to show an example of a resource set indicator field (for example, added in Rel. 17) in DCI.
[FIG. 20] FIG. 20 is a diagram to show the correspondence between TPMI indices and the precoding matrices W in 2-layer transmission using eight antenna ports when transform precoding is disabled.
[FIG. 21] FIG. 21 is a diagram to show the correspondence between TPMI indices and the precoding matrices W in 6-layer transmission using eight antenna ports when transform precoding is disabled.
[FIG. 22] FIG. 22 is a diagram to show an example of the association (or a table) between codepoints of a certain field (for example, a precoding information and number of layers field) of DCI and the numbers of layers/TPMI indices.
[FIG. 23] FIG. 23A to FIG. 23C are each a diagram to show an example of a precoder in option 1 according to a fourth embodiment.
[FIG. 24] FIG. 24 is a diagram to show an example of a table of option 1 according to the fourth embodiment.
[FIG. 25] FIG. 25A to FIG. 25D are each a diagram to show an example of a precoder in variation 1.
[FIG. 26] FIG. 26A and FIG. 26B are each a diagram to show an example of a precoder in option 1 of variation 2.
[FIG. 27] FIG. 27A and FIG. 27B are each a diagram to show an example of a precoder in option 2 of variation 2.
[FIG. 28] FIG. 28 is a diagram to show an example of a schematic structure of a radio communication system according to one embodiment.
[FIG. 29] FIG. 29 is a diagram to show an example of a structure of a base station according to one embodiment.
[FIG. 30] FIG. 30 is a diagram to show an example of a structure of a user terminal according to one embodiment.
[FIG. 31] FIG. 31 is a diagram to show an example of a hardware structure of the base station and the user terminal according to one embodiment.
[FIG. 32] FIG. 32 is a diagram to show an example of a vehicle according to one embodiment.

### Description of Embodiments

### (Control of SRS and PUSCH Transmission)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, an SRS resource type may indicate any of a periodic SRS (P-SRS), a semi-persistent SRS (SP-SRS), and aperiodic CSI (Aperiodic SRS (A-SRS)). Note that the UE may transmit a P-SRS and an SP-SRS periodically (or periodically after activation), and transmit an A-SRS, based on an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook-based or non-codebook-based uplink shared channel (Physical Uplink Shared Channel (PUSCH)) transmission based on an SRI.

For example, in a case of codebook-based transmission, the UE may determine a precoder (precoding matrix) for the PUSCH transmission, based on an SRI, a transmitted rank indicator (TRI), and a transmitted precoding matrix indicator (TPMI). In a case of non-codebook-based transmission, the UE may determine a precoder for the PUSCH transmission, based on the SRI.

The SRS resource information may include an SRS resource ID (SRS-ResourceId), the number of SRS ports, SRS port numbers, transmission Comb, SRS resource mapping (for example, time and/or frequency resource location, a resource offset, resource periodicity, the number of repetitions, the number of SRS symbols, an SRS bandwidth, and the like), hopping related information, an SRS resource type, a sequence ID, spatial relation information of an SRS, and the like.

The spatial relation information of an SRS (for example, an RRC information element "spatialRelationInfo") may indicate spatial relation information between a certain reference signal and an SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of an SRS may include at least one of an SSB index, a CSI-RS resource ID, and an SRS resource ID, as an index of the certain reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of an SRS may include a serving cell index, a BWP index (BWP ID), and the like corresponding to the certain reference signal.

When spatial relation information related to an SSB or a CSI-RS and an SRS is configured for a certain SRS resource, the UE may transmit the SRS resource by using the same spatial domain filter (spatial domain transmission filter) as the spatial domain filter for reception (spatial domain receive filter) of the SSB or the CSI-RS. In this case, the UE may assume that a UE receive beam of the SSB or the CSI-RS and a UE transmit beam of the SRS are the same.

When the UE is configured, for a certain SRS (target SRS) resource, with spatial relation information related to another SRS (reference SRS) and a certain SRS (target SRS), the UE may transmit the target SRS resource by using the same spatial domain filter (spatial domain transmission filter) as the spatial domain filter for transmission (spatial domain transmission filter) of the reference SRS. In other words, in this case, the UE may assume that a UE transit beam of the reference SRS and a UE transmit beam of the target SRS are the same.

The UE may determine a spatial relation of a PUSCH scheduled by DCI (for example, DCI format 0_1), based on the value of a certain field (for example, an SRS resource indicator (SRI) field) in the DCI. Specifically, the UE may use, for PUSCH transmission, spatial relation information of an SRS resource determined based on the value (for example, the SRI) of the certain field (for example, an RRC information element "spatialRelationInfo").

In Rel-15/16 NR, when codebook-based transmission is used for a PUSCH, a UE may be configured with an SRS resource set including two SRS resources at maximum with codebook usage, by RRC, and may be indicated with one of the two SRS resources at maximum by DCI (1-bit SRI field). A transmit beam for the PUSCH may be specified by the SRI field.

The UE may judge a TPMI and the number of layers (transmission rank) for the PUSCH, based on the precoding information and number of layers field (also referred to as a precoding information field below). The UE may select a precoder from a codebook for uplink for the same number of ports as the number of SRS ports indicated by a higher layer parameter "nrofSRS-Ports" configured for an SRS resource specified by the SRI field, based on the TPMI, the number of layers, and the like.

In Rel-15/16 NR, when non-codebook-based transmission is used for a PUSCH, the UE may be configured with an SRS resource set including four SRS resources at maximum with non-codebook usage, by RRC, and may be indicated with one or more of the four SRS resources at maximum by DCI (2-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook-based PUSCH transmission or use non-codebook-based PUSCH transmission, by a higher layer parameter "txConfig" indicating a transmission scheme. The parameter may indicate a value of "codebook" or "nonCodebook."

In the present disclosure, a codebook-based PUSCH (codebook-based PUSCH transmission, codebook-based transmission) may mean a PUSCH when the UE is configured with "codebook" as a transmission scheme. In the present disclosure, a non-codebook-based PUSCH (non-codebook-based PUSCH transmission, non-codebook-based transmission) may mean a PUSCH when the UE is configured with "non-codebook" as a transmission scheme.

### (Determination of PUSCH Precoder in Codebook (CB)-Based Transmission)

As described above, in a case of codebook (CB)-based transmission, a UE may determine a precoder for PUSCH transmission, based on an SRI, a TRI, a TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by the "precoding information and number of layers" field of the DCI. The precoding information and number of layers field is also referred to as a precoding information field, for simplicity.

The UE may report UE capability information related to a precoder type and be configured, by a base station, with the precoder type based on the UE capability information by higher layer signaling. The UE capability information may be precoder type information to be used by the UE in PUSCH transmission (which may, for example, be indicated by an RRC parameter "pusch-TransCoherence").

The UE may determine a precoder to be used for the PUSCH transmission, based on precoder type information (for example, an RRC parameter "codebookSubset") included in PUSCH configuration information notified by higher layer signaling (for example, an information element "PUSCH-Config" of RRC signaling). The UE may be configured with a subset of the PMI specified by the TPMI, by codebookSubset.

Note that the precoder type may be specified by any of or a combination of at least two of fully coherent (full coherent), partial coherent, and non-coherent (non coherent) (which may be indicated, for example, by a parameter such as "fullyAndPartialAndNonCoherent" or "partialAndNonCoherent."

For example, an RRC parameter "pusch-TransCoherence" indicating UE capability may indicate fully coherent (fullCoherent), partial coherent (partialCoherent), or non-coherent (nonCoherent). An RRC parameter "codebookSubset" may indicate "fully, partial, and non-coherent (fullyAndPartialAndNonCoherent)," "partial and non-coherent (partialAndNonCoherent)," or "non-coherent (nonCoherent)."

Fully coherent may mean that all the antenna ports to be used for transmission are synchronized (which may be expressed as being able to be co-phased for each coherent antenna port, appropriately applying a precoder for each coherent antenna port, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, a precoder type, coherency, PUSCH transmission coherence, a coherent type, a coherence type, a codebook type, a codebook subset, a codebook subset type, and the like may be interchangeably interpreted.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB-based transmission.

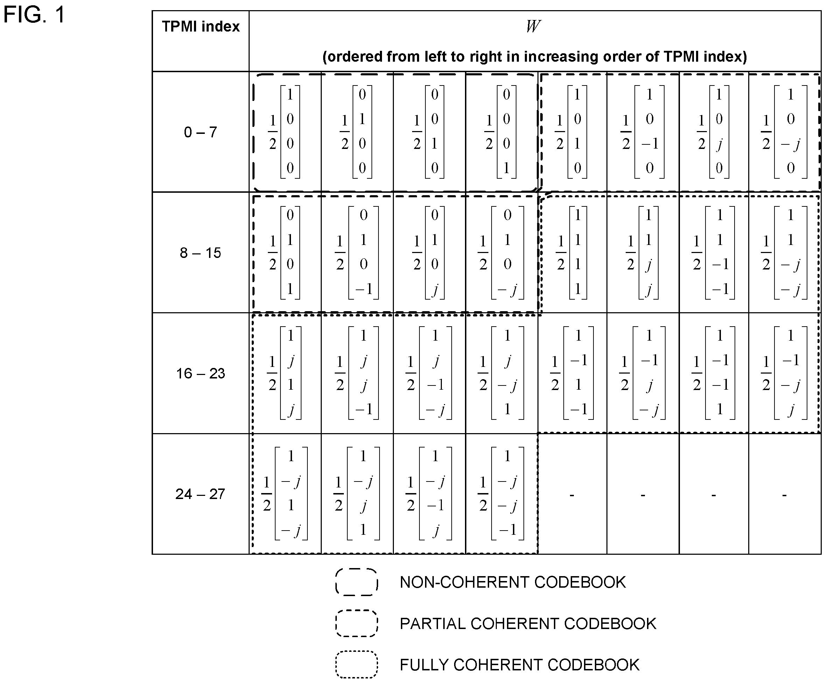

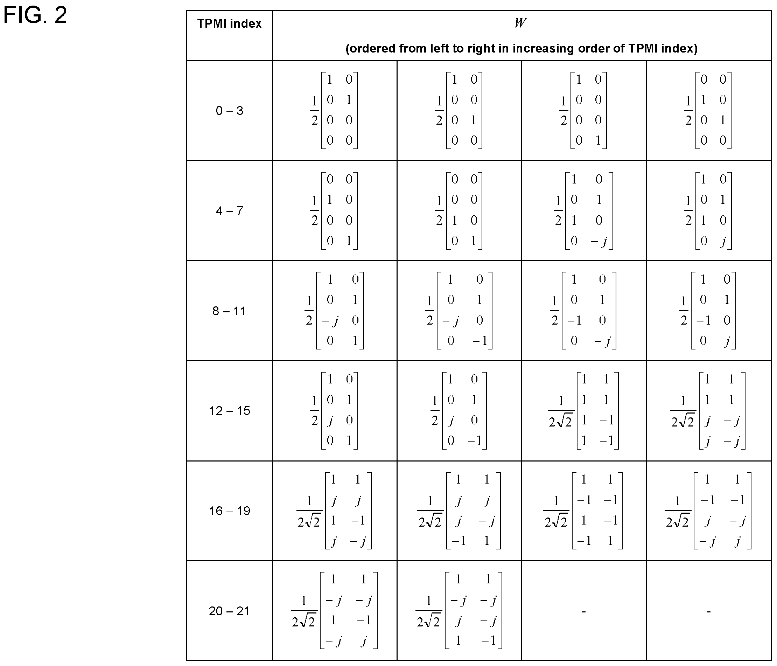

FIG. 1 is a diagram to show an example of the association between codebook subsets and corresponding TPMI indices. FIG. 1 corresponds to a table of precoding matrices W for single-layer (rank 1) transmission using four antenna ports when transform precoding (which may be referred to as a transform precoder) is disabled, in Rel-16 NR. FIG. 1 shows corresponding W in increasing order of TPMI indices from left to right (this similarly applies to FIG. 2).

The correspondence (which may be referred to as a table) showing W corresponding to TPMI indices as that shown in FIG. 1 is also referred to as a codebook. Part of this codebook is also referred to as a codebook subset.

In FIG. 1, when a codebook subset (codebookSubset) corresponds to fullyAndPartialAndNonCoherent, a UE is notified of any TPMI (TPMI index) of 0 to 27 for single-layer transmission. When a codebook subset corresponds to partialAndNonCoherent, the UE is configured with any TPMI of 0 to 11 for single-layer transmission. When a codebook subset corresponds to nonCoherent, the UE is configured with any TPMI of 0 to 3 for single-layer transmission.

In FIG. 1, when a TPMI of 0 to 3 is notified, a precoder for non-coherent is applied. When a TPMI of 4 to 11 is notified, a precoder for partial coherent is applied. When a TPMI of 12 to 27 is notified, a precoder for fully coherent is applied.

FIG. 2 each corresponds to a table of precoding matrices W for 2-4 layer (rank 2-4) transmission using four antenna ports when transform precoding is disabled, in Rel-16 NR.

According to FIG. 2, a TPMI of which a UE is notified for 2-layer transmission is any of 0 to 21 (codebook subset corresponding to fullyAndPartialAndNonCoherent), 0 to 13 (codebook subset corresponding to partialAndNonCoherent), or 0 to 5 (codebook subset corresponding to nonCoherent).

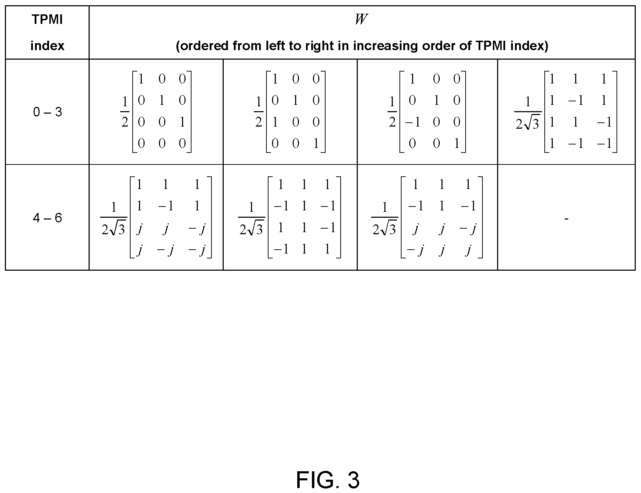

According to FIG. 3, a TPMI of which a UE is notified for 3-layer transmission is any of 0 to 6 (codebook subset corresponding to fullyAndPartialAndNonCoherent), 0 to 2 (codebook subset corresponding to partialAndNonCoherent), or 0 (codebook subset corresponding to nonCoherent).

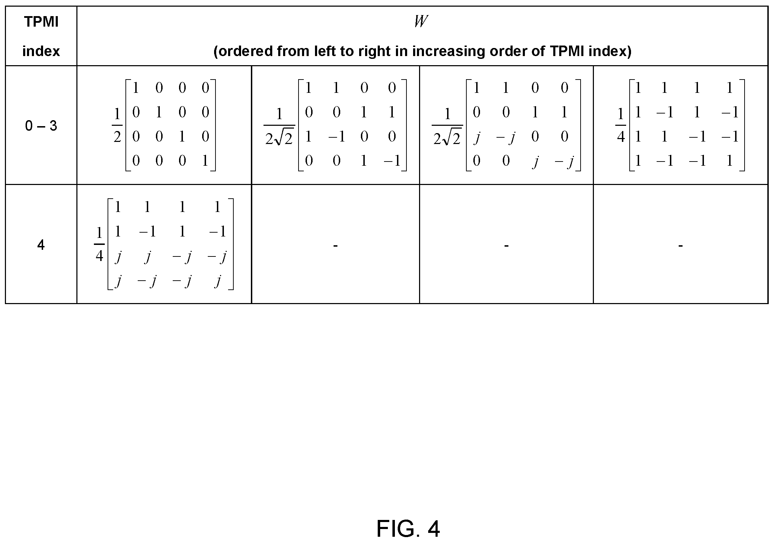

According to FIG. 4, a TPMI of which a UE is notified for 4-layer transmission is any of 0 to 4 (codebook subset corresponding to fullyAndPartialAndNonCoherent), 0 to 2 (codebook subset corresponding to partialAndNonCoherent), or 0 (codebook subset corresponding to nonCoherent).

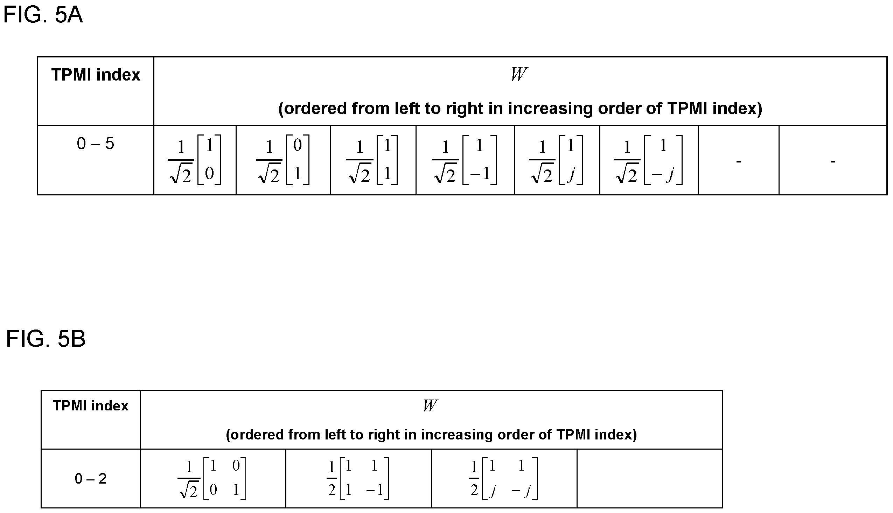

FIG. 5A corresponds to a table of precoding matrices W for single-layer (rank 1) transmission using two antenna ports, in Rel-16 NR. FIG. 5B corresponds to a table of precoding matrices W for 2-layer (rank 2) transmission using two antenna ports when transform precoding is disabled, in Rel-16 NR.

According to FIG. 5A, a TPMI of which a UE is notified for 2-port single-layer transmission is any of 0 to 5 (codebook subset corresponding to fullyAndPartialAndNonCoherent) or 0 and 1 (codebook subset corresponding to nonCoherent). When a notified TPMI is any of 0 and 1, a precoder for non-coherent is applied. When a notified TPMI is any of 2 to 5, a precoder for fully coherent is applied.

According to FIG. 5B, a TPMI of which a UE is notified for 2-port 2-layer transmission is any of 0 to 2 (codebook subset corresponding to fullyAndPartialAndNonCoherent) or 0 (codebook subset corresponding to nonCoherent).

Note that a precoding matrix having only one element not being 0 per column may be referred to as a non-coherent codebook. A precoding matrix having only a certain number of elements not being 0 per column (the certain number being larger than one but being not the number of all the elements per column) may be referred to as a partial coherent codebook. A precoding matrix having none of all the elements being 0 per column may be referred to as a fully coherent codebook.

A non-coherent codebook and a partial-coherent codebook may be referred to as antenna selection precoders, antenna port selection precoders, and the like. For example, a non-coherent codebook (non-coherent precoder) may be referred to as a 1-port selection precoder, 1-port port selection precoder, and the like. A partial-coherent codebook (partial coherent precoder) may be referred to as an x-port (x is an integer larger than 1) selection precoder, x-port port selection precoder, and the like. A fully-coherent codebook may be referred to as a non-antenna selection precoder, all-port precoder, and the like.

Note that, in the present disclosure, a partial-coherent codebook may correspond to codebooks (precoding matrices) obtained by a UE configured with a partial-coherent codebook subset (for example, RRC parameter "codebookSubset" = "partialAndNonCoherent") excluding codebooks corresponding to TPMIs specified to a UE configured with a non-coherent codebook subset (for example, RRC parameter "codebookSubset" = "nonCoherent") from codebooks corresponding to TPMIs specified by DCI for codebook-based transmission (specifically, in a case of 4-antenna-port single-layer transmission, codebooks for TPMIs of 4 to 11 (TPMI = 4 to 11)).

Note that, in the present disclosure, a fully-coherent codebook may correspond to codebooks (precoding matrices) obtained by a UE configured with a fully-coherent codebook subset (for example, RRC parameter "codebookSubset" = "fullyAndPartialAndNonCoherent") excluding codebooks corresponding to TPMIs specified to a UE configured with a partial-coherent codebook subset (for example, RRC parameter "codebookSubset" = "partialAndNonCoherent") from codebooks corresponding to TPMIs specified by DCI for codebook-based transmission (specifically, in a case of 4-antenna-port single-layer transmission, codebooks for TPMIs of 12 to 27 (TPMI = 12 to 27)).

Note that, as seen from FIGS. 5A and 5B, since there is no partial-coherent precoder for 2-antenna-port transmission, no configuration with a codebook subset being partial and non-coherent may be applied for two antenna ports.

### (Size of Precoding Information Field)

As described above, a UE may judge a TPMI and the number of layers (transmission rank) for a PUSCH, based on a precoding information field of DCI (for example, DCI format 0_1/0_2) for scheduling the PUSCH.

For a codebook-based PUSCH, the number of bits of the precoding information field may be judged (may vary) based on a configuration of a transform precoder for the PUSCH being enabled/disabled (for example, a higher layer parameter transformPrecoder), a configuration of a codebook subset for the PUSCH (for example, a higher layer parameter codebookSubset), a configuration of a maximum number of layers for the PUSCH (for example, a higher layer parameter maxRank), a configuration of uplink full power transmission for the PUSCH (for example, a higher layer parameter ul-FullPowerTransmission), the number of antenna ports for PUSCH, and the like.

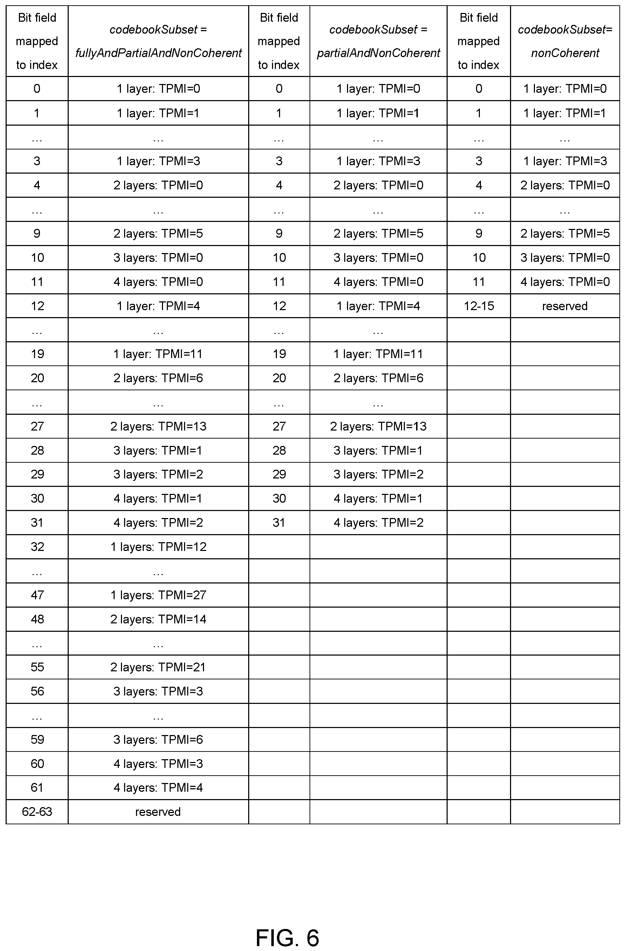

FIG. 6 is a diagram to show an example of the correspondence between values of a precoding information and number of layers field and the numbers of layers and TPMIs in Rel-16 NR. The correspondence of this example is a correspondence for four antenna ports in a case where a transform precoder is configured at disabled, where the maximum rank (maxRank) is configured at 2, 3, or 4, and where uplink full power transmission is not configured, configured at fullpowerMode2, or configured at fullpower, but is not restrictive. Note that it is naturally understood by those skilled in the art that the "bit field mapped to index" shown in FIG. 6 indicates a value of the precoding information and number of layers field.

In FIG. 6, the precoding information field is constituted of 6 bits when a fully coherent (fullyAndPartialAndNonCoherent) codebook subset is configured for a UE, 5 bits when a partial coherent (partialAndNonCoherent) codebook subset is configured for the UE, and 4 bits when a non-coherent (nonCoherent) codebook subset is configured for the UE.

Note that, as shown in FIG. 6, the number of layers and a TPMI corresponding to a certain value of the precoding information field may be the same (in common) irrespective of codebook subset configured for the UE. For example, in FIG. 6, the numbers of layers and the TPMIs indicated by the values of the precoding information field = 0 to 11 for fully coherent (fullyAndPartialAndNonCoherent), partial coherent (partialAndNonCoherent), and non-coherent (nonCoherent) codebook subsets may be the same. In FIG. 6, the numbers of layers and the TPMIs indicated by the values of the precoding information field = 0 to 31 for fully coherent (fullyAndPartialAndNonCoherent) and partial coherent (partialAndNonCoherent) codebook subsets may be the same.

Note that the precoding information field may be 0 bits for a non-codebook-based PUSCH. The precoding information field may be 0 bits for a 1-antenna-port codebook-based PUSCH.

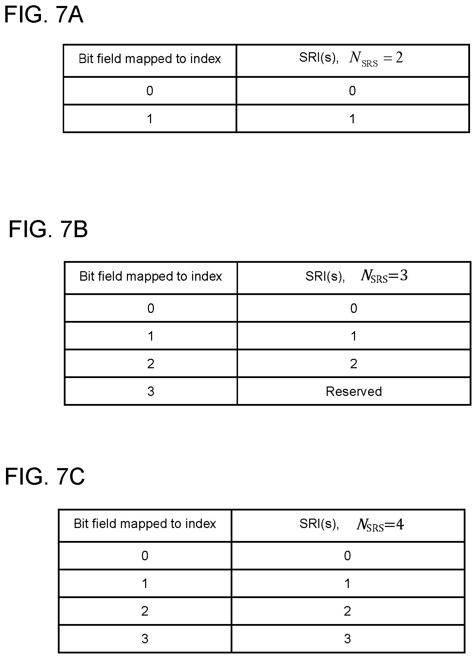

FIG. 7A is a diagram to show SRI indication or second SRI indication at the time of codebook-based PUSCH transmission in a case where ul-FullPowerTransmission is not configured or a case of ul-FullPowerTransmission = fullpowerMode1, ul-FullPowerTransmission = fullpowerMode2, or ul-FullPowerTransmission = fullpower and N_{SRS} = 2, in Rel. 17. FIG. 7B is a diagram to show SRI indication or second SRI indication for codebook-based PUSCH transmission in a case of ul-FullPowerTransmission = fullpowerMode2 and N_{SRS} = 3, in Rel. 17. FIG. 7C is a diagram to show SRI indication or second SRI indication for codebook-based PUSCH transmission in a case of ul-FullPowerTransmission = fullpowerMode2 and N_{SRS} = 4, in Rel. 17.

The SRI indication corresponds to an SRS resource indicator field of DCI, and the second SRI indication corresponds to a Second SRS resource indicator field of the DCI. The SRS resource set indicator field is constituted of 2 bits in a case of txConfig = nonCodeBook, being configured by srs-ResourceSetToAddModList, and two SRS resource sets related to usage "nonCodeBook" being present, or a case of txConfig = codebook, being configured by srs-ResourceSetToAddModList, and two SRS resource sets related to usage "codebook" being present. Otherwise, the SRS resource set indicator field is constituted of 0 bits.

The SRS resource indicator field is [log₂(N_{SRS})] according to FIG. 7A to FIG. 7C in a case of a higher layer parameter txConfig = codebook. N_{SRS} denotes the number of configured SRS resources in an SRS resource set indicated by the SRS resource set indicator field (if present). Otherwise, N_{SRS} denotes the number of configured SRS resources related to a higher parameter indicating a value corresponding to usage 'codeBook' in an SRS resource set configured by a higher layer parameter srs-ResourceSetToAddModList.

### <SRS Configuration of Codebook-based PUSCH>

In codebook-based transmission, a PUSCH is scheduled by DCI format 0_0, DCI format 0_1, or DCI format 0_2, or configured semi-fixedly. Only one or two SRS resource sets can be configured in SRS-ResourceSetToAddModList with a higher layer parameter indicating usage "codebook" of SRS-ResourceSet. Only one or two SRS resource sets can be configured in srs-ResourceSetToAddModListDCI-0-2 with a higher layer parameter indicating usage "codebook" of SRS-ResourceSet.

When usage of a higher layer parameter of SRS-ResourceSet is configured at "codebook" and two SRS resource sets are configured in srs-ResourceSetToAddModList or srs-ResourceSetToAddModListDCI-0-2, one or two SRIs and one or two TPMIs are given by two SRS resource indicators and two DCI fields indicating precoding information and the number of layers.

A UE applies an indicated SRI(s) and a TPMI(s) to one or more PUSCH repetitions according to SRS resource sets related to PUSCH repetitions. When two SRS resource sets are configured by SRS-ResourceSetToAddModList or srs-ResourceSetToAddModListDCI-0-2 and usage of a higher layer parameter of SRS-ResourceSet is configured at "codebook," the UE does not expect that different numbers of SRS resources are configured in the two SRS resource sets.

In codebook-based transmission, only one SRS resource may be indicated from an SRS resource set, based on an SRI. Except for a case where a higher layer parameter "ul-FullPowerTransmission" is configured at "fullpowerMode2," the maximum number of configured SRS resources for codebook-based transmission is two. When an aperiodic SRS is configured for the UE, an SRS request field of the DCI triggers transmission of an aperiodic SRS resource.

Except for a case where the higher layer parameter "ul-FullPowerTransmission" is configured at "fullpowerMode2," when a plurality of SRS resources are configured at "codebook" by SRS-ResourceSet, the UE expects that a higher layer parameter "nrofSRS-Port" of SRS-Resource in SRS-ResourceSet is configured at the same value for all the SRS resources.

When a higher layer parameter "ul-FullPowerTransmission" is configured at "fullpowerMode2," (1) to (3) below are applied.
(1) The UE can configure a plurality of SRS resources each having one SRS resource or having the same or different numbers of SRS ports, in an SRS resource set with usage configured at "codebook."
(2) When a plurality of SRS resources are configured in an SRS resource set, two different spatial relations can be configured at maximum for all the SRS resources in the SRS resource set with usage configured at "codebook."
(3) Two or four SRS resources are supported at maximum in an SRS resource set with usage configured at "codebook," according to capability of the UE.

In a case of a normal codebook-based PUSCH, one SRS resource set including two SRS resources having the same number of ports can be configured. In a case of codebook-based PUSCH repetitions (for multi-TRP), two SRS resource sets having the same number of SRS resources may be configured for each repetition. In a case of "fullpowerMode2" in codebook base, one SRS resource set and SRS resources with the same number of port or different numbers of ports can be configured.

### (Transmission of More Than Four Antenna Ports)

In Rel-15/16 NR, uplink (UL) Multi Input Multi Output (MIMO) transmission with up to four layers is supported. For future radio communication systems, to achieve higher spectrum efficiency, it is studied to support UL transmission with the number of layers larger than four. For example, for Rel-18 NR, 6-rank maximum transmission using six antenna ports, 6-or-8-rank maximum transmission using eight antenna ports, and the like are studied.

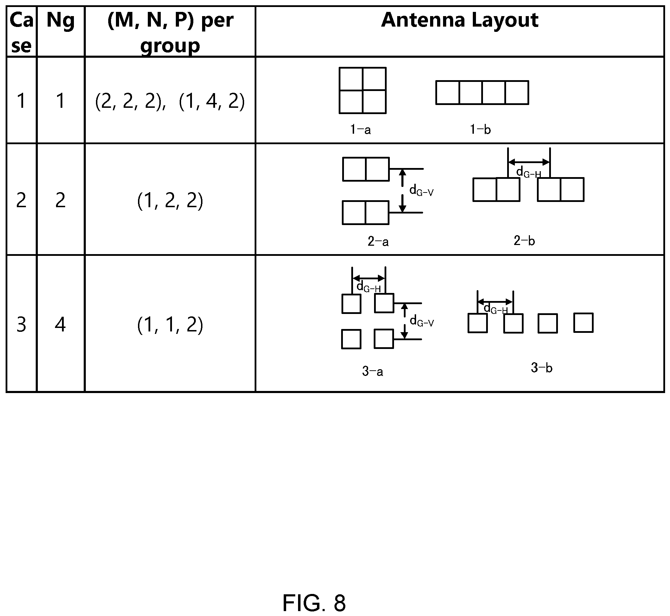

FIG. 8 is a diagram to show examples of an antenna layout with eight antenna ports. Ng denotes the number of antenna groups. M denotes the number of antennas (or antenna elements) in the first dimension, and N denotes the number of antennas (or antenna elements) in the second dimension. The first dimension and the second dimension may correspond to the horizontal direction and the vertical direction, for example. P denotes the number of polarization planes. A case of P = 2 corresponds to cross-polarization antennas.

A UE may report antenna layout information or a coherent number as UE capability information.

Note that the antenna layout is not limited to the examples shown in FIG. 8. For example, the number of panels for the antennas being arranged, the directions of the panels, coherency of each panel/antenna (fully coherent, partial coherent, non-coherent, or the like), antenna arrangement in a specific direction (horizontal, vertical, or the like), and a polarization antenna configuration (single polarization, cross-polarization, the number of polarization planes, and the like) may be different from those in FIGS. 7A and 7B. dG-H and dG-V respectively denote a horizontal interval and a vertical interval between centers of adjacent antenna groups.

In Rel-15/16 NR, transmission of one codeword (CW) in one PUSCH is supported. However, for Rel-18 NR, it is studied that a UE transmits more than one CW in one PUSCH. For example, supporting of 2-CW transmission for ranks 5 to 8, supporting of 2-CW transmission for ranks 2 to 8, and the like are studied.

It is assumed that, in a UE of Rel. 15 and Rel. 16, only one beam/panel is used for UL transmission in a certain time. However, in Rel. 17 or later versions, to improve UL throughput and reliability, it is studied to perform multi-beam/multi-panel simultaneous UL transmissions (for example, PUSCH transmissions) to one or more TRPs. Note that multi-beam/multi-panel simultaneous PUSCH transmissions may correspond to PUSCH transmission with the number of layers larger than four or may correspond to PUSCH transmission with the number of layers equal to or smaller than four.

A precoding matrix for UL transmission using more than four antenna ports (antenna ports the number of which is larger than four) is studied. For example, a codebook for 8-port transmission (which may be referred to as 8-transmission UL codebook (8 TX UL codebook) and the like) is studied.

### (Analysis)

SRS resources for more than four antenna ports (for example, eight ports) are configured for a codebook-based PUSCH and supported. In a case of a codebook-based PUSCH, the SRS resources for more than four antenna ports (for example, eight ports) may be configured in consideration of assumption of UE antennas.

However, study about how to determine a precoding matrix for UL transmission using more than four antenna ports (antenna ports the number of which is larger than four) has not been advanced. For example, study about a precoder for 1-to-8-layer transmission using eight antenna ports has not been advanced. Unless this is made clear, an increase in communication throughput may be suppressed.

Thus, the inventors of the present invention came up with the idea of a method for appropriately performing UL transmission using more than four antenna ports.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a TPMI and a TPMI index may be interchangeably interpreted. A port and an antenna port may be interchangeably interpreted. It may mean 8 TX (eight transmissions), eight ports, or eight antenna ports. A port/antenna port may mean a port/antenna port for UL (for example, SRS/PUSCH) transmission. In the present disclosure, an SRS resource set and a resource set may be interchangeably interpreted. A coherent group and an SRS resource set may be interchangeably interpreted.

In the present disclosure, description will be given mainly of 8 TX. However, the description may be applied to 5 TX, 6 TX, 7 TX, or 8 TX or more, similarly to the case of 8 TX.

### (Radio Communication Method)

### <First Embodiment>

When a UE supports 8-layer maximum UL (PUSCH) transmission and includes 8 TX (eight antenna ports), the UE may transmit (report), to a network (base station), UE capability information related to antenna layout/antenna coherency of the UE for codebook-based PUSCH transmission, and may receive, from the network, a configuration related to an SRS resource set(s) and SRS resources, based on the UE capability by higher layer signaling/physical layer signaling. The configuration may be different for each SRS resource set.

A first embodiment may be applied to a single TRP. When multi-TRP PUSCH repetition transmission is employed, the number of SRS resource sets may be twice the number described in the present embodiment. A UE supporting PUSCHs of more than four layers need not support SRSs of more than four ports. Such a UE may employ option 2 or 3.

### {Option 1}

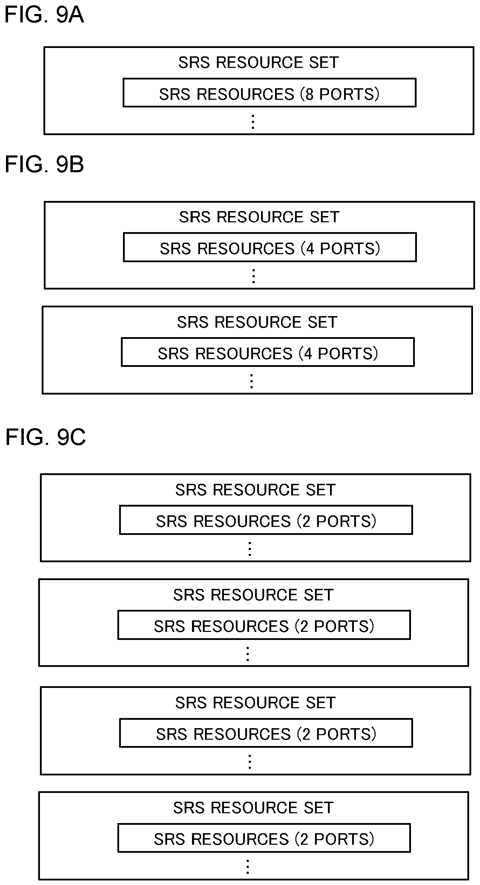

A UE may have a similar configuration to an existing one to support 8-port SRSs (FIG. 9A). Specifically, normally, the UE may be configured with one SRS resource set and two SRS resources at maximum having the same number of ports (for example, eight ports). When the UE has reported a specific antenna capability (for example, fully coherent), the UE may expect (assume) configuration of this option. When the UE has reported any antenna capability (for example, fully/partial/non-coherent), the UE may expect (assume) configuration of this option.

### {Option 2}

A UE may be configured with two SRS resource sets and X (X = 1/2/...) 4-port SRS resources at maximum per resource set (FIG. 9B). Compared with option 1, there is no need to configure 8-port SRS resources, but the number of SRS resource sets is doubled. When the UE has reported a specific UE capability related to antennas (for example, UE antennas for two coherent groups and four antenna ports per coherent group), the UE may expect (assume) this option. The number of SRS resources per resource set may be restricted, but need not be restricted, to be the same.

### {Option 3}

A UE may be configured with four SRS resource sets and X (X = 1/2/...) 2-port SRS resources at maximum per resource set (FIG. 9C). Compared with option 1, there is no need to configure 8-port SRS resources, but the number of SRS resource sets is quadrupled. When the UE has reported a specific UE capability related to antennas (for example, UE antennas for four coherent groups and two antenna ports per coherent group), the UE may expect (assume) this option. The number of SRS resources per resource set may be restricted, but need not be restricted, to be the same.

### {Supplement to Options 1 to 3}

Design principles of options 2 and 3 are similar to those of multi-TRP PUSCH repetition. A plurality of SRS resource sets (for example, two or four) are configured for a plurality of UE coherent groups (for example, two or four coherent groups, corresponding to two or four panels of the UE), which is similar to a configuration of two SRS resource sets for 2-TRP PUSCH repetitions. When a higher layer parameter "ul-FullPowerTransmission" is configured at "fullpowerMode2" as described in "SRS Configuration of Codebook-based PUSCH," one or a plurality of SRS resources having the same or different numbers of ports may be configured in each SRS resource set in options 1 to 3. The UE may transmit new UE capability for configuring a different SRS resource set, for codebook-based PUSCH transmission.

Similarly, in a case of a case other than 8 TX (for example, 5 TX, 6 TX, or 7 TX), the UE is configured so that a result of multiplication of the number of SRS resource sets by the number of antenna ports per SRS resource is a certain number (5, 6, or 7).

According to the first embodiment, it is possible to appropriately configure an SRS resource set(s)/SRS resources for a UE with 8 TX.

### <Second Embodiment>

The present embodiment is implementable in combination with the first embodiment. Option 2 or 3 to be described in the present embodiment indicate option 2 or 3 of the first embodiment.

### {SRS Resource Indicator Field}

When a plurality of SRS resource sets are configured in option 2 or 3 of the first embodiment for a codebook-based PUSCH, a plurality of SRS resource indicator fields may be present in DCI (DCI format 0_1/0_2). The number of SRS resource indicator fields may be the same as the number of configured SRS resource sets.

When option 2 is configured, two SRS resource indicator fields may be present, and each field corresponds to an SRS resource indicator in an SRS resource set. When option 3 is configured, four SRS resource indicator fields are present, and each field corresponds to an SRS resource indicator in an SRS resource set.

As another example, the number of SRS resource indicator fields may be one even when any of options 2 and 3 is used. One SRS resource indicator field indicates one SRI for the first SRS resource set and another SRI for the second SRS resource set. The UE may be configured with mapping of SRS resource indication codepoints of each SRS resource set and SRS resources may be configured by RRC/MAC CE. The number of SRS resource indicator fields may be fixed or configured by higher layer signaling.

Each field may indicate an SRS resource in a corresponding resource set. Alternatively, each field may indicate "zero SRS resources from the resource set" (zero SRS resources in the SRS resource). If one field indicates "zero SRS resources from a resource set," this also means a rank/layers of a scheduled PUSCH, which affects interpretation of the "precoding information and number of layers" table in FIG. 6.

### {SRS Resource Set Indicator Field}

An SRS resource set indicator field of DCI may be used for at least one of the number of indicated resource sets, an index of an indicated resource set, and the order of resource sets when a plurality of resource sets are indicated.

When option 2 is configured, an SRS resource set indicator may indicate which one of one resource set or two resource sets are indicated. When one resource set is indicated, any of the first resource set and the second resource set may be indicated.

When option 3 is configured, an SRS resource set indicator may be indicated to indicate any of one set, two sets, three sets, and four sets. When x resource set(s) is indicated, a corresponding x resource set index (indices) may be indicated.

Each field of "SRS resource indicator" is preferably possible to indicate "zero SRS resources from a resource set."

When an indicated resource set index (indices) is defined by a specific rule in advance, the resource set index (indices) need not be explicitly indicated. When one resource set is indicated, this may always mean the first resource set. When two resource sets are indicated, this may always mean the first resource set and the second resource set.

Indication of how many resource sets to indicate means the rank/layers of a scheduled PUSCH, which may hence affect interpretation of the "precoding information and number of layers" table in FIG. 6.

An SRS resource indicator field and an SRS resource set field in the present embodiment may be applied similarly to a case of Rel-17 multi-TRP PUSCH repetition. The SRS resource indicator fields used in FIG. 7A to FIG. 7C are also applicable to 8 TX UL transmission.

A UE may transmit (report) UE capability information indicating whether to support a plurality of SRS resource indicator fields. The UE may transmit UE capability information related to the number of SRS resource indicator fields.

### {Examples of Table of SRS Resource Indicator in Option 2}

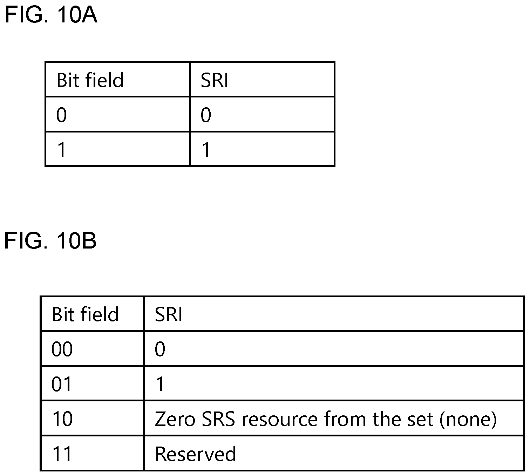

An example of tables of an SRS resource indicator and an SRS resource set indicator when option 2 in the first embodiment is employed will be described. FIG. 10A and FIG. 10B are each a diagram to show an example of the correspondence between a DCI bit field and an SRS resource indicator when two SRS resource sets each have two four-port SRS resources.

In FIG. 10A, when two fields for the SRS resource indicator indicate '1' and '1,' the second SRS resource (SRI = 1) of the first resource set and the second SRS resource (SRI = 1) of the second resource set are indicated. In FIG. 10A, when two fields for the SRS resource indicator indicate '0' and '1,' the first SRS resource (SRI = 0) of the first resource set and the second SRS resource (SRI = 1) of the second resource set are indicated.

In FIG. 10B, when two fields for the SRS resource indicator indicate '01' and '10,' this means that the second SRS resource is indicated in the first resource set, and no SRS is indicated in the second resource set (Zero SRS resources from the set (none)). In this case, rank ≤ 4 is indicated. When two fields for the SRS resource indicator indicate '01' and '00,' this means that the second SRS resource (SRI = 1) of the first resource set and the first SRS resource (SRI = 0) of the second resource set are indicated.

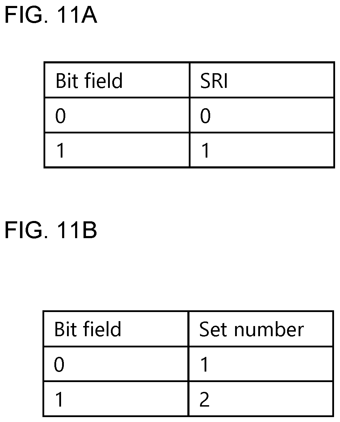

FIG. 11A is a diagram to show the correspondence between a DCI bit field and an SRS resource indicator when two SRS resource sets each have two 4-port SRS resources. FIG. 11B is a diagram to show the correspondence between a DCI bit field and an SRS resource indicator (set number) when two SRS resource sets each have two 4-port SRS resources.

FIG. 11A is similar to FIG. 10A. When the bit field of an SRS resource set indicator in FIG. 11B is "0," only one resource set is indicated (set index indicating the first resource set), and only an SRS resource indicator field in the first resource set is enabled for a UE. The UE can ignore the second SRS resource indicator field. When a bit field for the SRS resource set indicator in FIG. 11B indicates "1," two resource sets are indicated, and two SRS resource indicator fields are enabled for the UE.

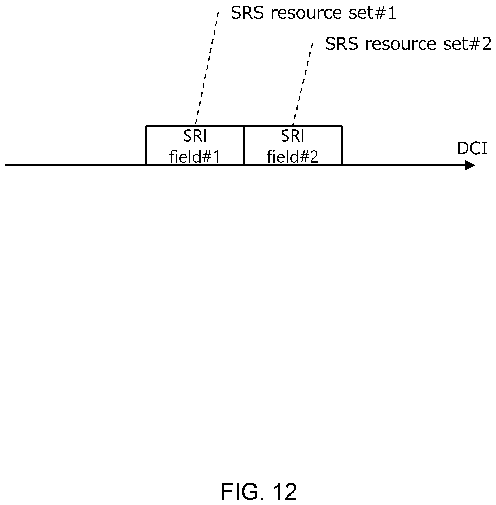

FIG. 12 is a diagram to show the correspondence between SRS resource sets and SRS resource indicator (SRI) fields in DCI, in option 2. As shown in FIG. 12, SRS resource sets #1 and #2 correspond to SRS resource indicator (SRI) fields #1 and #2, respectively.

### {Examples of Table of SRS Resource Indicator in Option 3}

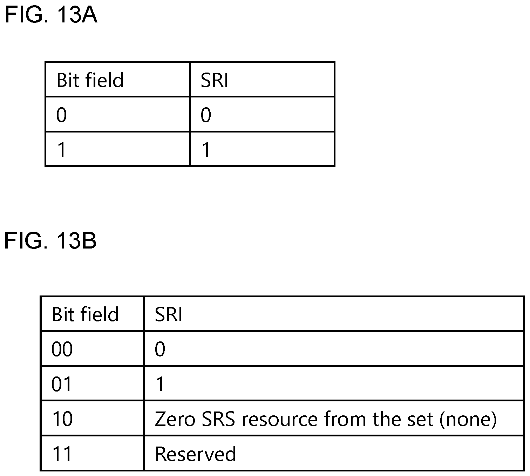

An example of tables of an SRS resource indicator and an SRS resource set indicator when option 3 in the first embodiment is employed will be described. FIG. 13A and FIG. 13B are each a diagram to show an example of the correspondence between a DCI bit field and an SRS resource indicator when four SRS resource sets each have two two-port SRS resources.

In FIG. 13A, when four fields for the SRS resource indicator indicate "1," '1,' '0,' and '0,' this means that the second SRS resource (SRI = 1) of the first resource set, the second SRS resource (SRI **=** 1) of the second resource set, the first SRS resource (SRI = 0) of the third resource set, and the first SRS resource (SRI = 0) of the fourth resource set are indicated.

In FIG. 13B, when four fields for the SRS resource indicator indicate '01,' '10,' '10,' and '00,' this means that the second SRS resource (SRI = 1) of the first resource set and the first SRS resource (SRI = 0) of the fourth resource set are indicated, while no SRS (Zero SRS resources from the set (none)) is indicated for the second resource set and the third resource set. In this case, it is meant that rank ≤ 4.

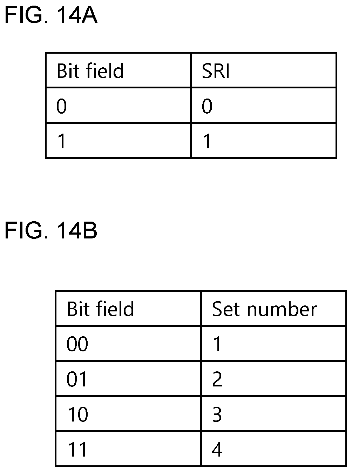

FIG. 14A is a diagram to show the correspondence between a DCI bit field and an SRS resource indicator when four SRS resource sets each have two 2-port SRS resources. FIG. 14B is a diagram to show the correspondence between a DCI bit field and an SRS resource set indicator when four SRS resource sets each have two 2-port SRS resources.

FIG. 14A is similar to FIG. 13B. When an SRS resource set indicator corresponds to "00" in FIG. 14B, only one resource set is indicated (set index (set number) indicating the first resource set), and only an SRS resource indicator field in the first resource set is enabled for a UE. In this case, it is also meant that rank ≤ 2

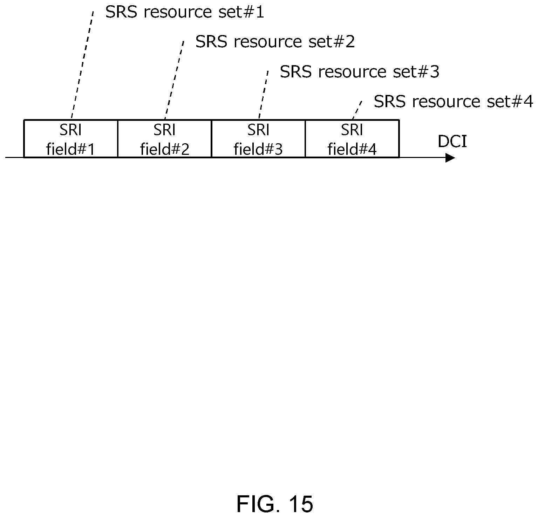

FIG. 15 is a diagram to show the correspondence between SRS resource sets and SRS resource indicator (SRI) fields in DCI, in option 3. As shown in FIG. 15, SRS resource sets #1 to #4 correspond to SRS resource indicator (SRI) fields #1 to #4, respectively.

According to the second embodiment, when a UE is configured with two (or four) SRS resource sets and four-port (or two-port) SRS resources, the UE can receive appropriate indication using SRS resource indicator fields and SRS resource set indicator fields of

### DCI.

### <New 8-port UL Precoder>

A method of reusing an existing 2-port or 4-port UL precoder to form a new 8-port UL precoder will be described. Note that W₀ denotes a matrix of all 0 in each diagram. Representation using existing precoders W_{4TX}, W_{2TX}, and W₀ is also provided.

### {Example of Two Coherent Groups}

For a UE with two coherent groups, one or two existing precoders W_{4TX} may be reused to form a new 8-port precoder.

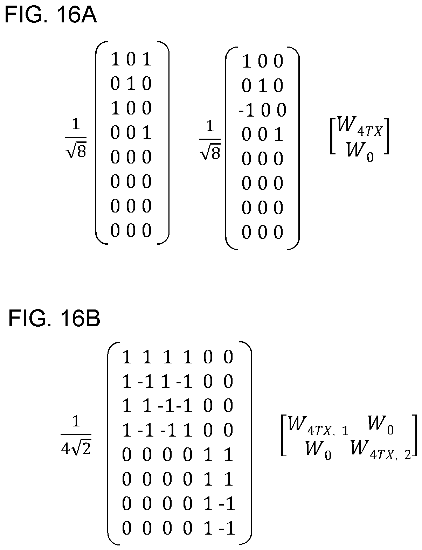

FIG. 16A is a diagram to show an example of a new 3-layer precoder reusing an existing 4-port partial coherent precoder. In FIG. 16A, the existing 3-layer precoder shown in FIG. 3 is reused, for example.

FIG. 16B is a diagram to show an example of a 6-layer precoder using four layers from one coherent group and two layers from another coherent group. In FIG. 16B, existing 2-layer and 4-layer precoders shown in FIG. 2 and FIG. 4 are reused, for example.

### {Example of Four Coherent Groups}

In a case of a UE with four coherent groups, one, two, three, or four existing precoders W_{2TX} may be reused to form a new 8-port precoder.

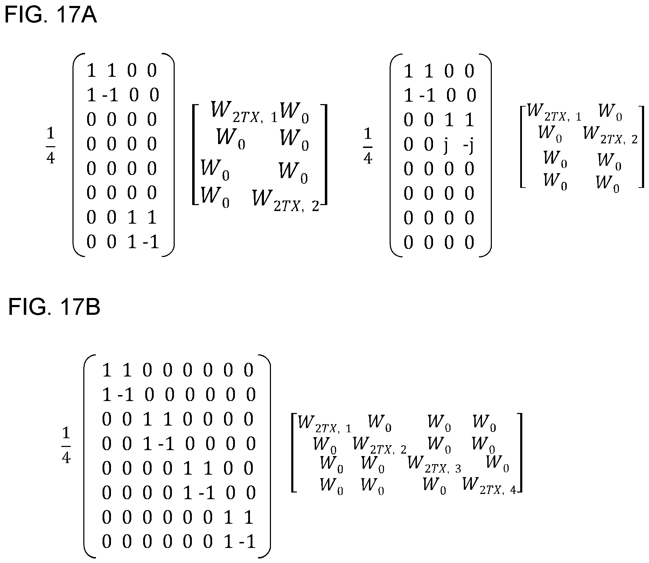

FIG. 17A is a diagram to show an example of a 4-layer precoder using two layers from one coherent group and two layers from another coherent group. In FIG. 17A, the existing 2-layer precoder shown in FIG. 5B is reused, for example.

FIG. 17B is a diagram to show an example of an 8-layer precoder using four 2-layer precoders from four coherent groups. In FIG. 17B, the existing 2-layer precoder shown in FIG. 5B is reused, for example.

### <Rel-17 Multi-TRP PUSCH Repetition>

In Rel. 17, two codebook/non-codebook SRS resources are configured by RRC. In addition, two power control parameter sets are configured by RRC. Two SRI fields, TPMI fields, PTRS-DMRS fields, and TPC fields are indicated by DCI. Dynamic switching of single-TRP/multi-TRP is indicated by a new SRS resource set indicator field of the DCI.

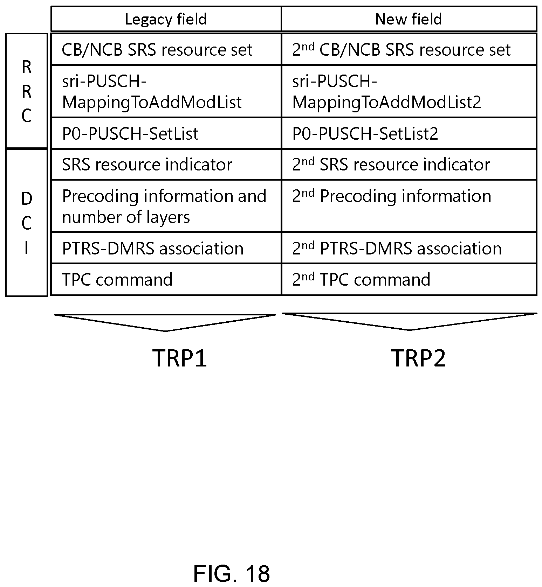

FIG. 18 is a diagram to show examples of a legacy field/parameter (for example, Rel. 15/16) and a new field/parameter (for example, added in Rel. 17) in DCI and RRC. As shown in FI. 18, the new field/parameter corresponds to TRP2. This enables supporting of multi-TRP.

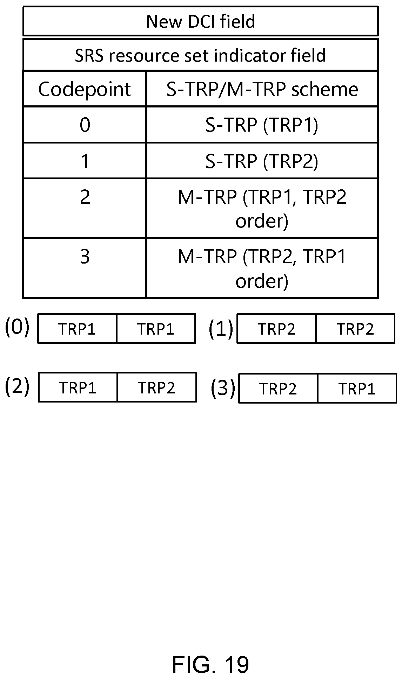

FIG. 19 is a diagram to show an example of a resource set indicator field (for example, added in Rel. 17) in DCI. As shown in FIG. 19, single-TRP/multi-TRP is indicated by an SRS resource set indicator, and a TRP (TRP1/TRP2) to be used and an order are further indicated.

### <Analysis>

In the following embodiments, a plurality of fields for an SRS resource indicator and an SRS resource set indicator will be proposed.

It is studied, similarly to multi-TRP PUSCHs, to use, when a plurality of coherent groups are present for a UE, a separate TPMI indication for each coherent group instead of using one TPMI indication for 8 TX. For example, a UE with two coherent groups (four ports per group) can consider two TPMI indications per 4 TX.

For example, a UE with four coherent groups (two ports per group) may receive four TPMI indications per 2 TX. In this case, the TPMI indications can reuse existing 2 TX and 4 TX codebooks and TPMI indices. One coherent group of the UE for 8 TX UL transmission may be regarded as being similar to one TRP of an MTRP PUSCH function.

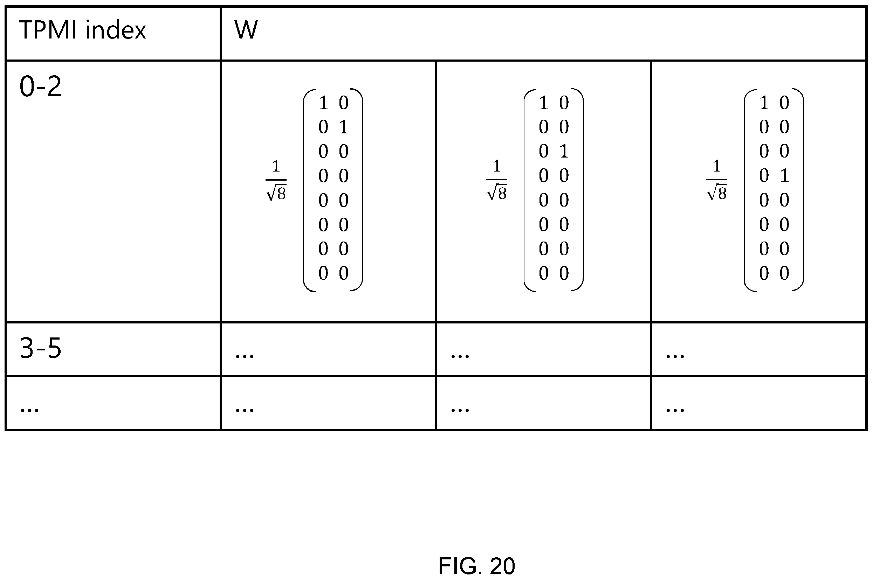

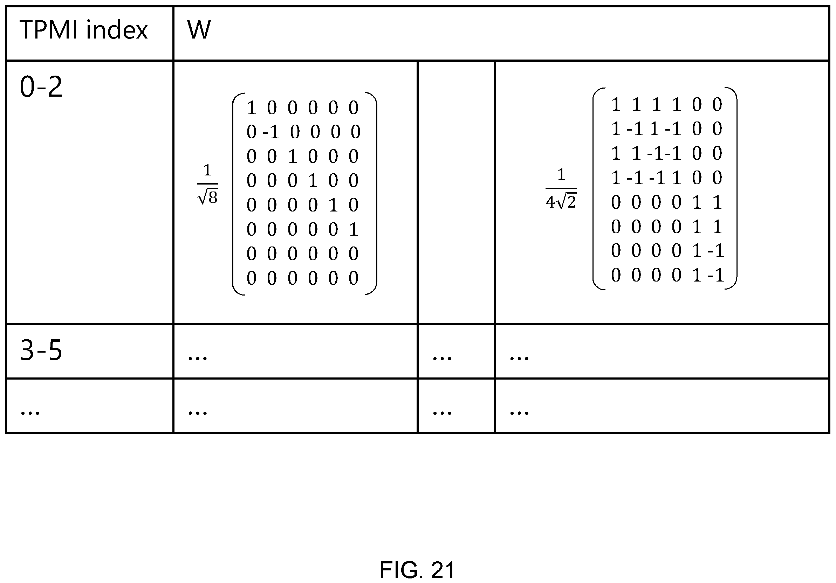

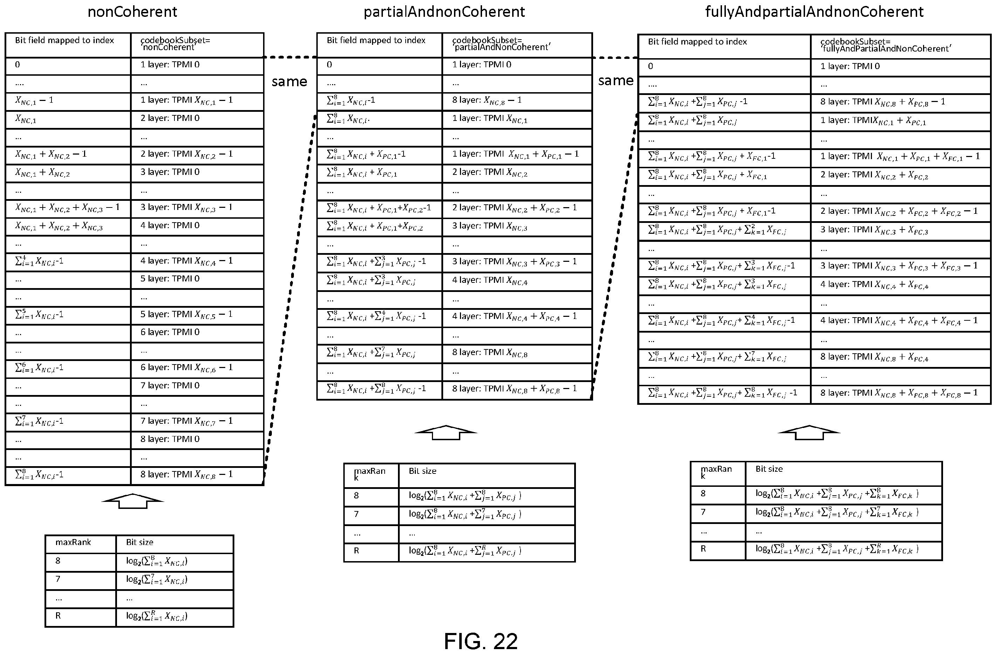

At the time of designing a new 8 TX precoder, a new TPMI index table for an 8 TX precoder (for example, FIG. 20 and FIG. 21 to be described later) and a new "precoding information and number of layers" table (for example, FIG. 22 to be described later) can be designed. Alternatively, instead of designing a new table for a new 8 TX precoder, it is also conceivable that, by reusing an existing table to perform indication of a plurality of fields, a UE generates a new 8 TX precoder, based on the indication of the plurality of fields (refer to third and fourth embodiments to be described later).

### <TPMI Index Table>

FIG. 20 is a diagram to show the correspondence between TPMI indices and the precoding matrices W in 2-layer transmission using eight antenna ports when transform precoding is disabled.

In a new TPMI index table, each TPMI index corresponds to a new 8 TX precoder. In the third and fourth embodiments to be described later, using only one "precoding information and number of layers" field can indicate the same precoder as that of TPMI index = 0 in FIG. 20.

FIG. 21 is a diagram to show the correspondence between TPMI indices and the precoding matrices W in 6-layer transmission using eight antenna ports when transform precoding is disabled.

In the third and fourth embodiments to be described later, two "precoding information and number of layers" fields are needed to indicate the same precoder as that of TPMI index = 0 in FIG. 21, an example which is described in the fourth embodiment.

### <Precoding Information and Number of Layers Table>

Description will be given of the association (for example, a precoding information and number of layers table) between codepoints of a certain field of DCI and the number of layers/TPMI indices for a plurality of codebook subsets in a case where more than four antenna ports/layers are supported in UL transmission.

When eight antenna ports/layers are supported in UL, the correspondence between at least part of codepoints (or bit fields/field indices mapped to indices) of a certain field of DCI and the number of layers/TPMI indices may be configured in common for a plurality of codebook subsets. In other words, the same number of layers/TPMI indices may correspond between the plurality of codebook subsets in the at least part of the codepoints of the certain field of DCI.

FIG. 22 is a diagram to show an example of the association (or a table) between codepoints of a certain field (for example, a precoding information and number of layers field) of DCI and the numbers of layers/TPMI indices.

FIG. 22 shows a case where eight antenna ports and a transform precoder are disabled and a maximum rank (for example, maxRank) is 2, 3, 4, 5, 6, 7, or 8. FIG. 22 may be applied to a case where full-power transmission (for example, ul-FullPowerTransmission) is not configured, where full power mode 2 (for example, fullpowerMode2) is configured, or where full power (for example, fullpower) is configured.

A different bit size of the certain field of DCI may be defined for each of the plurality of codebook subsets. In each of the codebook subsets, a different bit size may be defined/configured based on the maximum rank (for example, maxRank) .

FIG. 22 shows a case where the number of codepoints (or bit size) corresponding to the numbers of layers/TPMI indices when a codebook subset is non-coherent (nonCoherent) is smaller than those of the other codebook subsets (for example, partialAndNonCoherent/fullyAndPartialAndNonCoherent). FIG. 22 also shows a case where the number of codepoints (or bit size) corresponding to the numbers of layers/TPMI indices when a codebook subset is partial and non-coherent (partialAndNonCoherent) is smaller than that of the other codebook subset (for example, fullyAndPartialAndNonCoherent).

When a codebook subset is non-coherent (nonCoherent), one or more TPMI indices are defined for each layer. For example, X_{NC,i} TPMI indices may correspond/be configured for i layer(s). X_{NC,i} may denote the number of non-coherent precoders (Precoder number) corresponding to the i layer(s).

When a codebook subset is partial and non-coherent (partialAndNonCoherent), a TPMI index (indices) corresponding to partial coherent are defined in addition to the TPMI indices corresponding to non-coherent for each layer. For example, X_{PC,i} TPMI indices in addition to X_{NC,i} may correspond/be configured for the i layer(s). X_{PC,i} may denote the number of partial-coherent precoders (Precoder number) corresponding to the i layer(s).

When a codebook subset is fully, partial, and non-coherent (fullyAndPartialAndNonCoherent), a TPMI index (indices) corresponding to fully coherent are defined in addition to the TPMI indices corresponding to non-coherent and the TPMI indices corresponding to partial coherent for each layer. For example, X_{FC,i} TPMI indices in addition to X_{NC,i} and X_{PC,i} may correspond/be configured for the i layer(s). X_{FC,i} may denote the number of fully-coherent precoders (Precoder number) corresponding to the i layer (s).

The number of TPMI indices (or precoder number) to be supported may be configured separately for each number of layers. For example, a smaller number of TPMI indices (or precoder number) to be supported may be configured as the number of layers increases. In this case, the number of TPMI indices to be supported may be the same for some of the numbers of layers.

As described above, codepoints corresponding to the numbers of layers/TPMI indices in a case of a codebook subset being non-coherent (nonCoherent) may also be applied to (or configured the same in) a case of a codebook subset being partial and non-coherent (partialAndNonCoherent). Moreover, codepoints corresponding to the numbers of layers/TPMI indices in a case of a codebook subset being partial and non-coherent (partialAndNonCoherent) may also be applied to (or configured the same in) a case of a codebook subset being fully, partial, and non-coherent (fullyAndPartialAndNonCoherent).

As described above, when eight antenna ports/layers are supported in UL, the correspondence between at least part of codepoints of a certain field of DCI and the number of layers/TPMI indices is configured in common for a plurality of codebook subsets. This can suppress an increase in overhead of the certain field of DCI.

By each codepoint (or field index) of the certain field of DCI, the number of layers and a TPMI index are indicated to a UE. The UE may judge the number of layers/TPMI index (or a precoding matrix) to use for UL transmission, based on the value of a codepoint of the certain field of the DCI. A base station may indicate, to the UE, the number of layers/TPMI index (or a precoding matrix) to use for UL transmission, by the codepoint of the certain field of the DCI.

The table shown in FIG. 22 may be applied in a specific case. For example, when eight antenna ports/Tx/layers are configured for UL transmission (for example, PUSCH/SRS) by RRC/MAC CE/DCI, the table in FIG. 22 may be applied. Otherwise, a table for two/four antenna ports (for example, a table defined in Rel. 16 or previous versions) may be applied.

FIG. 22 shows a case where a combination of the number of layers and a TPMI index corresponds to each codepoint (or field index) of the certain field of DCI, but this is not restrictive. A configuration where the number of layers and a TPMI index correspond separately (or are indicated separately to a UE) may be employed.

The number X_{NC,i}, X_{PC,i}, X_{FC,i} of TPMIs (or precoder number) supported in each layer (for example, i layer(s)) for eight antenna ports may be configured by RRC/MAC CE. In this case, the bit size of the certain field (for example, the precoding information and number of layers field) of DCI may be configured to be the same as that of other antenna ports (for example, four antenna ports).

Alternatively, the bit size of the certain field of DCI corresponding to eight antenna ports and the bit size of the certain field of the DCI corresponding to other antenna ports (for example, four antenna ports) may be configured separately (for example, differently).

Note that FIG. 22 shows a table of a case where the maximum rank for eight antenna ports is 2, 3, 4, 5, 6, 7, or 8, but this is not restrictive. A table for a case where the maximum rank for eight antenna ports is smaller than 8 (for example, where the maximum rank is 2, 3, 4, 5, 6, or 7) may be separately defined/configured. In this case, a table configuration corresponding to two or three codebook subsets may be employed.

### <Third Embodiment>

When a UE supports 8-layer maximum UL (PUSCH) transmission and includes 8 TX (eight antenna ports), the UE may receive DCI (for example, DCI format 0_1/0_2) including a plurality of fields of at least one of the precoding information and number of layers field and an enhanced TPMI field for codebook-based PUSCH transmission. The UE may control UL transmission using the 8 TX, based on the DCI.

At least either of the plurality of a precoding information and number of layers fields and a plurality of the TPMI fields may correspond to a plurality of respective coherent groups configured for the terminal.

A UE with two coherent groups and four ports per group may be indicated with TPMIs per coherent group or the rank of a scheduled PUSCH by using two enhanced TPMI fields. For the indicated TPMIs and rank, an existing 4 TX UL codebook and an existing TPMI index table are reused.

A UE with four coherent groups and two ports per group may be indicated with TPMIs per coherent group or the rank of a scheduled PUSCH by using four enhanced TPMI fields. For the indicated TPMIs and rank, an existing 2 TX UL codebook and an existing TPMI index table are reused.

### {Two Coherent Groups}

For a UE with (supporting) two coherent groups, the following two cases are applied.

### <<Case 1>>

When two "SRS resource indicator" fields are indicated as two enabled SRS resource indicators, two "precoding information and number of layers" (or "enhanced TPMI") fields corresponding to the respective SRS resource indicators are present.

### <<Case 2>>

When only one "SRS resource indicator" field is indicated for a certain SRS resource set and no SRS resource indicator is indicated for another SRS Resource set, one enabled "precoding information and number of layers" (or "enhanced TPMI") field corresponding to the indicated SRS resource for the corresponding SRS resource set is present.

For each "enhanced TPMI" field, an existing "precoding information and number of layers table for four antenna ports (FIG. 6) and/or an existing "TPMI index" table for four antenna ports (FIGS. 1 to 4) may be reused.

### {Four Coherent Groups}

Similarly, for a UE with (supporting) four coherent groups, the following two cases are applied.

### <<Case 1>>

When four (or a plurality of) "SRS resource indicator" fields are indicated as being enabled, four (or a plurality of) "precoding information and number of layers" (or "enhanced TPMI") fields corresponding to the respective "SRS resource indicator" fields are present.

### <<Case 2>>

When only one "SRS resource indicator" field is indicated as an enabled SRS resource for a certain SRS resource set and no SRS resource is indicated for another SRS resource set, one "precoding information and number of layers" (or "enhanced TPMI") field corresponding to the SRS resource indicated for the corresponding SRS resource set is enabled.

For each "enhanced TPMI" field, an existing "precoding information and number of layers" table for two antenna ports and/or an existing "TPMI index" table for two antenna ports (FIG. 5A and FIG. 5B) can be reused.

The UE may transmit (report) UE capability indicating supporting of a plurality of "precoding information and number of layers" (or "enhanced TPMI") fields. The UE may transmit UE capability information related to the number of the plurality of fields.

According to the third embodiment, even when a UE is configured with a plurality of coherent groups, the UE can appropriately control UL transmission by using a plurality of fields ("precoding information and number of layers" or "enhanced

### TPMI") .

### <Fourth Embodiment>

In a case of a UE with two coherent groups, when two "SRS resource indicator" fields are enabled, option 1 (options 1a to 1c) below is conceivable.

### <<Option 1>>

For the two "enhanced TPMI" fields, the existing table of the "precoding information and number of layers" field for four antenna ports can be reused (FIG. 6). In other words, the UE may judge indication of a TPMI field by using the same table as the table for the precoding information and number of layers field. Hence, one field indicates layers and a TPMI index of the coherent group/SRS resource of a corresponding SRS resource set.

### <<Option 1a>>

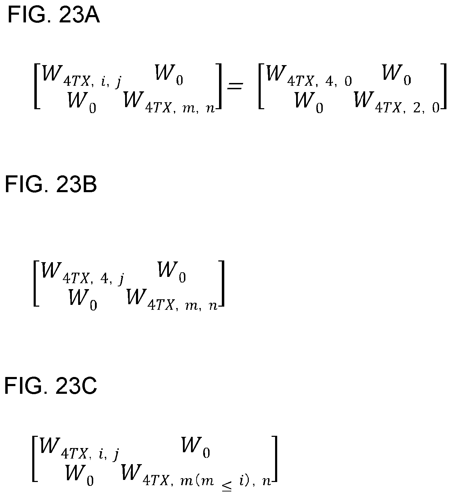

For each of the "enhanced TPMI" fields, an existing "precoding information and number of layers" table for four antenna ports may be reused. For example, the first "enhanced TPMI" field = 11 indicates "four layers, TPMI = 0 (W_{4TX,4,0})" for the first coherent group. The second "enhanced TPMI" field = 4 indicates "two layers, TPMI = 0 (W_{4TX,2,0}) " for the second coherent group. An 8 TX codebook is illustrated by these two fields as in FIG. 23A. W_{4TX,i,j} means a 4 TX precoder in a TPMI table for i-layer transmission with TPMI index j. There is no relation and restriction between W_{4TX,i,j} and W_{4TX,m,n}.

### <<Option 1b>>

One "enhanced TPMI" field can indicate only a "4-layer" entry. This can significantly reduce the bit size of this field and is equivalent to indicating one TPMI index from a 4-layer TPMI table. For another "enhanced TPMI" field, an existing "precoding information and number of layers" table for four antenna ports can be reused. An 8 TX codebook is illustrated by this field as in FIG. 23B. Since only one precoder is indicated from all W_{4TX,4,j}, overhead can be reduced.

### <<Option 1c>>

For one (the first) "enhanced TPMI" field, an existing "precoding information and number of layers" table for four antenna ports can be reused. For another field, a "precoding information and number of layers" table can be interpreted based on indication of the first field. For example, in a case of the one "enhanced TPMI" field = 9 and TPMI = 5 in two layers, the other field can be indicated only from 1-layer and 2-layer entries. An 8 TX codebook is illustrated by this field as in FIG. 23C. When there are a restriction and a relation of some kind between W_{4TX,i,j} and W_{4TX,m,n}, m ≤ i is assumed.

Note that a scaling factor for a newly combined 8 TX precoder may be recalculated in each option.

### <<Option 2>>

For two "enhanced TPMI" fields, an existing TPMI index table for four antenna ports can be reused (FIG. 1 to FIG. 4). Layer information may be indicated separately by two layer indicator fields, for example.

### <<Option 2a>>

Similarly to option 1a, there is no restriction and relation between the two "enhanced TPMI" fields and the two "layer indicator" fields.

### <<Option 2b>>

Similarly to option 1b, one "layer indicator" field indicates only four layers, and one "enhanced TPMI" fields indicates only a 4-layer precoder.

### <<Option 2c>>

Similarly to option 1c, one "layer indicator" field is smaller than the other field.

### {Concrete Examples}

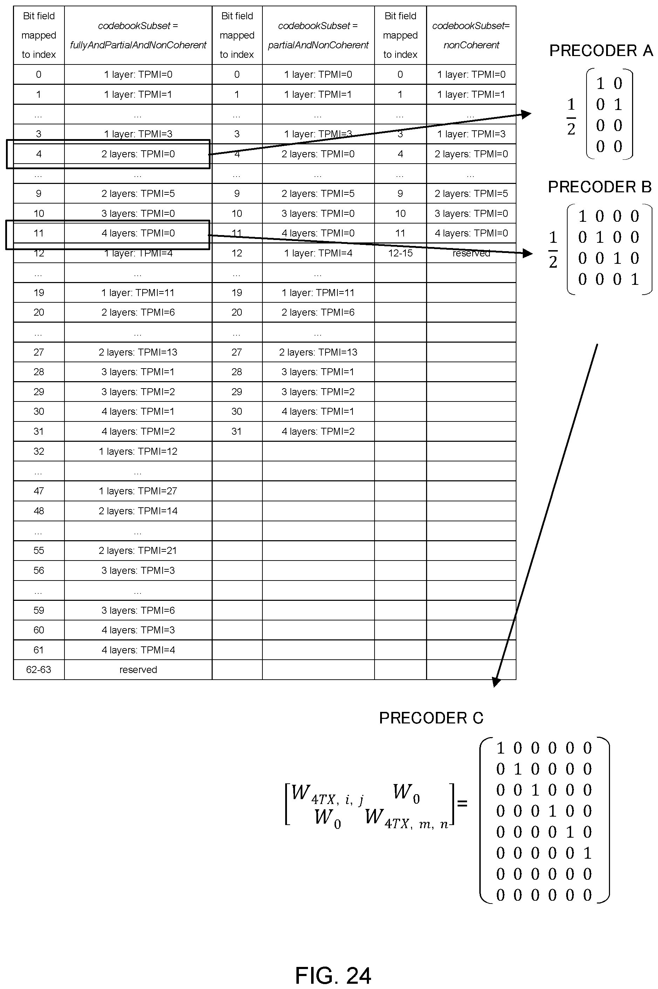

FIG. 24 is a diagram to show an example of a table of option 1 according to the fourth embodiment. In other words, FIG. 24 shows an example of reusing the table in FIG. 6 for "enhanced TPMI."

When the second "enhanced TPMI" field indicates 4, two layers may be indicated for the second SRS resource set/UE coherent group, and precoder A in FIG. 24 may be indicated.

When the first "enhanced TPMI" field indicates 11, four layers may be indicated for the first SRS resource set/UE coherent group, and precoder B in FIG. 24 may be indicated.

Then, after the two fields are decoded, the UE may apply precoder C obtained by combining precoders A and B. This is similar to TPMI = 0 in the new 8 TX table shown in FIG. 21. In this case, a scaling factor need be recalculated.

According to the fourth embodiment, a precoder for 8 TX UL transmission can be indicated by using new TPMI (enhanced TPMI) fields.

### <Fifth Embodiment>

When only one "SRS resource indicator" enabled for a certain SRS resource set is indicated and no SRS resource is indicated for another SRS resource set, for a UE with two coherent groups, a precoding information and number of layers (or "enhanced TPMI") field may be enabled. For the "enhanced TPMI" field, an existing precoding information and number of layers table for four antenna ports can be reused (FIG. 6) as described in the fourth embodiment.

Hence, one "SRS resource indicator" field indicates both a layer(s) and a TPMI index of the coherent group/SRS resource of a corresponding SRS resource set. In this case, only PUSCH(s) ≤ 4 layers is indicated.

### <Variation 1>

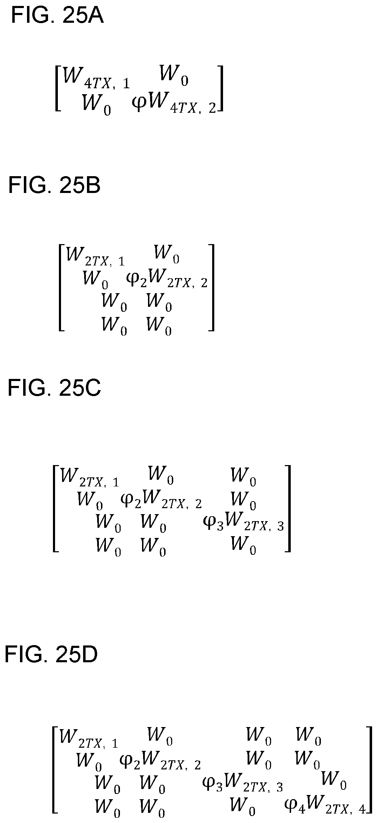

In <New 8-port UL Precoder> described above, when a new 8 TX precoder is configured by two 4 TX precoders, a UE only reuses an existing 4 TX precoder without considering co-phasing between two coherent groups. However, a UE may perform co-phasing (for example, four values {1, -1, j, -j}) between two coherent groups (4 TX precoders) to determine a new 8 TX precoder (precoder corresponding to eight antenna ports), based on the two 4 TX precoders. This new 8 TX precoder can be enhanced as shown in FIG. 25A.

When a UE is configured with four coherent groups, a new 8 TX precoder based on two TX precoders can be enhanced as shown in FIG. 25B to FIG. 25D.

Note that a function of co-phasing between two coherent groups may be introduced to the UE.

### <Variation 2>

In <New 8-port UL Precoder> described above, reuse of a 2 TX/4 TX UL precoder is considered to form an 8 TX non-coherent/partial coherent precoder. In further consideration of a configuration of an 8 TX fully coherent precoder, a new 8 TX precoder can be formed by reusing only a fully coherent 2 TX/4 TX precoder. As a new 8 TX precoder, options 1 and 2 below may be applied.

### <<Option 1>>

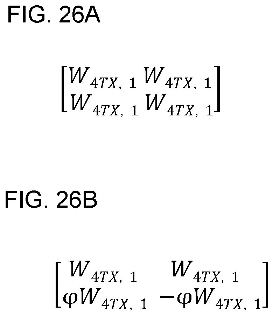

A UE may reuse one 4 TX full coherent precoder to form a new 8 TX full coherent precoder (FIG. 26A and FIG. 26B). In this case, co-phasing may be considered or need not be considered. In addition, a new scaling factor for the 8 TX precoder may be considered but need not be considered.

### <<Option 2>>

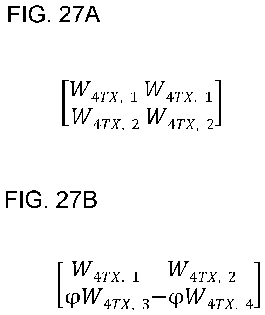

A UE may reuse a plurality of 4 TX full coherent precoders to form a new 8 TX full coherent precoder (FIG. 27A and FIG. 27B). In this case, co-phasing may be considered or need not be considered. In addition, a new scaling factor for the 8 TX precoder may be considered but need not be considered.

The UE may transmit UE capability information indicating supporting of forming a new 8 TX fully coherent precoder based on an existing 2 TX/4 TX UL precoder.

### <Sixth Embodiment>

Based on the third embodiment/fourth embodiment/variation 1, when a UE with two coherent groups is indicated with two "enhanced TPMI" fields corresponding to respective SRS resources of each set, additional co-phasing indication is needed to indicate co-phasing of the two indicated precoders. The co-phasing can be configured by RRC/MAC or indicated by a new field of DCI format 0_1/0_2.

Also in a case of a UE with four coherent groups, one or a plurality of events of co-phasing may similarly be indicated by RRC/MAC/DCI, for co-phasing between different coherent groups.

The UE may transmit (report) UE capability information related to co-phasing (co-phasing) between coherent groups.

A similar example to the present embodiment may also be applied to new scaling factor indication. In other words, co-phasing of the present embodiment may be interpreted as a scaling factor.

### <Supplement>

At least one of the above-described embodiments may be applied only to a UE that has reported a specific UE capability or supports the specific UE capability.

The specific UE capability may indicate supporting related to specific processing/operation/control/information of at least one of the embodiments above.

The specific UE capability may be capability applied over all the frequencies (commonly irrespective of frequency), capability per frequency (for example, cell, band, BWP), capability per frequency range (for example, Frequency Range 1 (FR1), FR2, FR3, FR4, FR5, FR2-1, FR2-2), or capability per subcarrier spacing (SCS).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied when the UE is configured with specific information related to the above-described embodiment by higher layer signaling. For example, the specific information may be information indicating that 8 TX UL transmission is enabled, any RRC parameter for a specific release (for example, Rel. 18), or the like.

When the UE does not support at least one of the specific UE capabilities above or is not configured with the specific information above, the UE may apply Rel-15/16 operation, for example.

### (Supplementary Notes)

Regarding one embodiment of the present disclosure, the following supplementary notes of the invention will be given.

### {Supplementary Note 1}

A terminal including:
a control section that controls, when the terminal includes eight antenna ports, transmission of capability information related to at least one of antenna layout and antenna coherency for codebook-based physical uplink shared channel (PUSCH) transmission; and
a receiving section that receives a configuration related to a sounding reference signal (SRS) resource set and SRS resources, based on the capability information.

### {Supplementary Note 2}

The terminal according to supplementary note 1, wherein the configuration includes a configuration indicating four SRS resource sets and 2-port SRS resources or a configuration indicating two SRS resource sets and 4-port SRS resources.

### {Supplementary Note 3}

The terminal according to supplementary note 1 or 2, wherein the receiving section receives downlink control information (DCI) including a same number of SRS resource indicator fields as the number of the SRS resource sets.

### {Supplementary Note 4}

The terminal according to any one of supplementary notes 1 to 3, wherein the receiving section receives downlink control information (DCI) including at least one of the number of the SRS resource sets, indices of the SRS resource sets, and an order of the resource sets.

### (Supplementary Notes)

Regarding one embodiment of the present disclosure, the following supplementary notes of the invention will be given.

### {Supplementary Note 1}

A terminal including:
a receiving section that receives, when the terminal includes eight antenna ports, downlink control information (DCI) including a plurality of fields of at least one of a precoding information and number of layers field and a transmission precoding matrix indicator (TPMI) field for codebook-based physical uplink shared channel (PUSCH) transmission; and
a control section that controls uplink transmission, based on the DCI.

### {Supplementary Note 2}

The terminal according to supplementary note 1, wherein at least either of a plurality of the precoding information and number of layers fields, and a plurality of the TPMI fields correspond to a plurality of respective coherent groups included in the terminal.

### {Supplementary Note 3}

The terminal according to supplementary note 1 or 2, wherein the control section judges indication of the TPMI field by using a same table as a table for the precoding information and number of layers field.

### {Supplementary Note 4}

The terminal according to any one of supplementary notes 1 to 3, wherein the control section performs co-phasing on two coherent groups to determine a precoder corresponding to the eight antenna ports based on two precoders.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

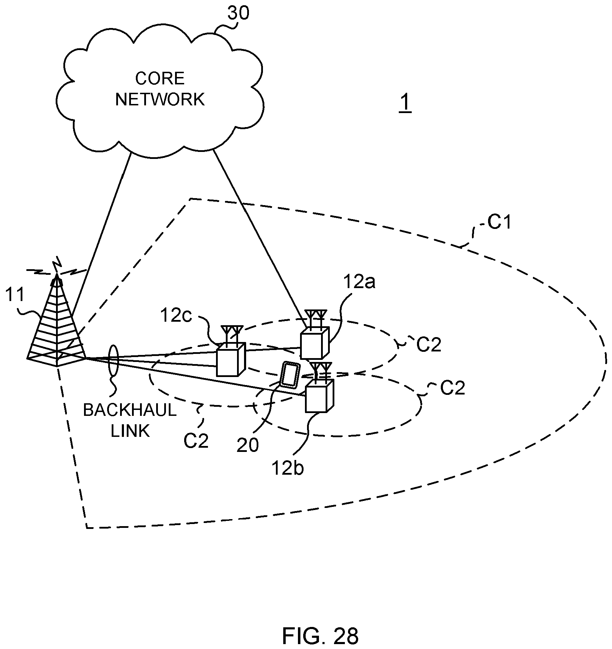

FIG. 28 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

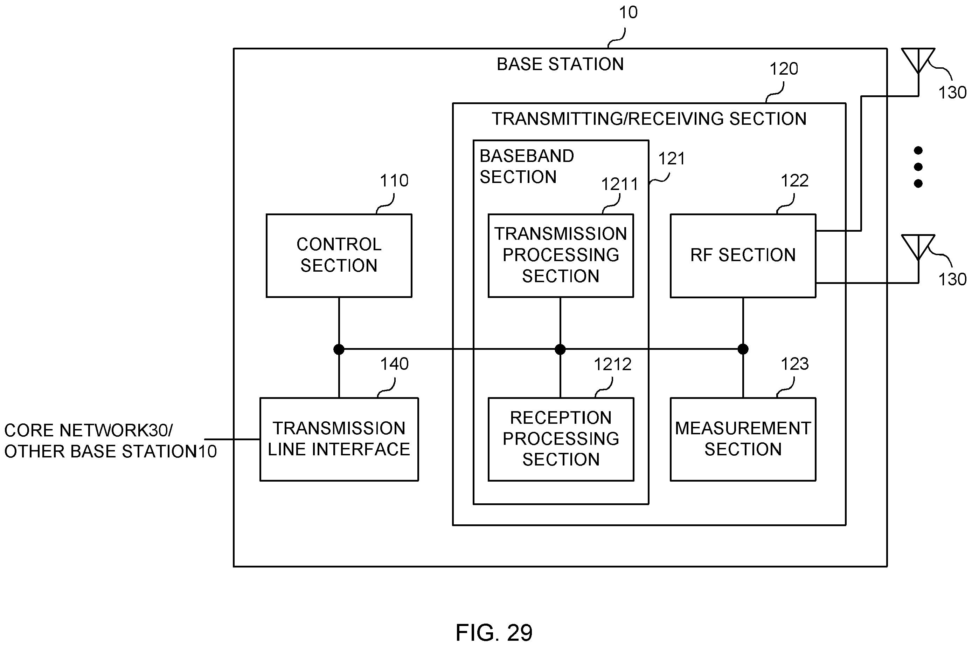

FIG. 29 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF), other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may control, when the terminal includes eight antenna ports, reception of capability information related to at least one of antenna layout and antenna coherency for codebook-based physical uplink shared channel (PUSCH) transmission. The transmitting/receiving section 120 may transmit a configuration related to a sounding reference signal (SRS) resource set and SRS resources, based on the capability information.

The transmitting/receiving section 120 may transmit, when the terminal includes eight antenna ports, downlink control information (DCI) including a plurality of fields of at least one of a precoding information and number of layers field and a transmission precoding matrix indicator (TPMI) field for codebook-based physical uplink shared channel (PUSCH) transmission. The control section 110 may control uplink reception, based on the DCI.

### (User Terminal)

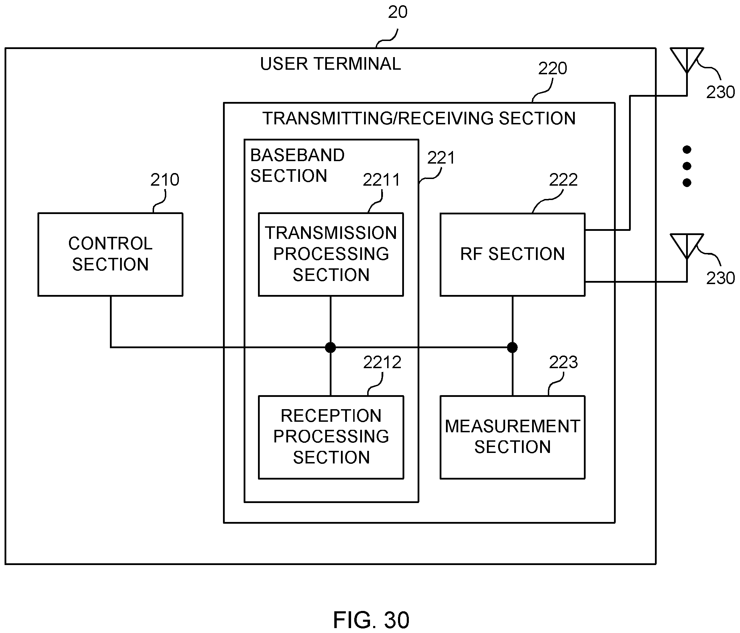

FIG. 30 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the

### transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may control, when the terminal includes eight antenna ports, transmission of capability information related to at least one of antenna layout and antenna coherent for codebook-based physical uplink shared channel (PUSCH) transmission. The transmitting/receiving section 220 may receive a configuration related to a sounding reference signal (SRS) resource set and SRS resources, based on the capability information.

The configuration may include a configuration indicating four SRS resource sets and 2-port SRS resources or a configuration indicating two SRS resource sets and 4-port SRS resources.

The transmitting/receiving section 220 may receive downlink control information (DCI) including the same number of SRS resource indicator fields as the number of the SRS resource sets.

The transmitting/receiving section 220 may receive downlink control information (DCI) including at least one of the number of the SRS resource sets, indices of the SRS resource sets, and an order of the resource sets.

The transmitting/receiving section 220 may receive, when the terminal includes eight antenna ports, downlink control information (DCI) including a plurality of fields of at least one of a precoding information and number of layers field and a transmission precoding matrix indicator (TPMI) field for codebook-based physical uplink shared channel (PUSCH) transmission. The control section 210 may control uplink transmission, based on the DCI.

At least either of a plurality of the precoding information and number of layers fields and a plurality of the TPMI fields may correspond to a plurality of respective coherent groups included in the terminal.

The transmitting/receiving section 220 may judge indication of the TPMI field by using the same table as the table for the precoding information and number of layers field.

The control section 210 may perform co-phasing on two coherent groups to determine a precoder corresponding to the eight antenna ports based on two precoders.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

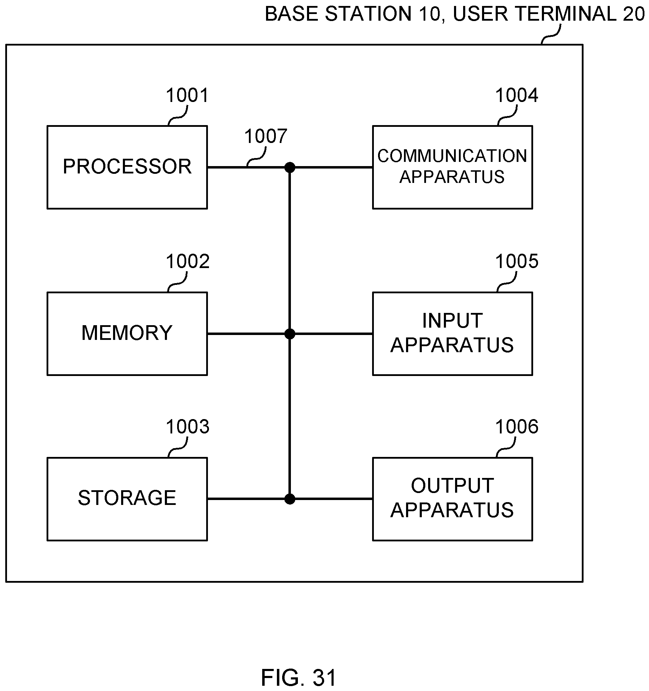

For example, a base station, a user terminal, and so on according to one embodiment of the present disclosure may function as a computer that executes the processes of the radio communication method of the present disclosure. FIG. 31 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "X holds") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a base station transmitting information to a terminal and the base station indicating control/operation based on the information to the terminal may be interchangeably interpreted.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

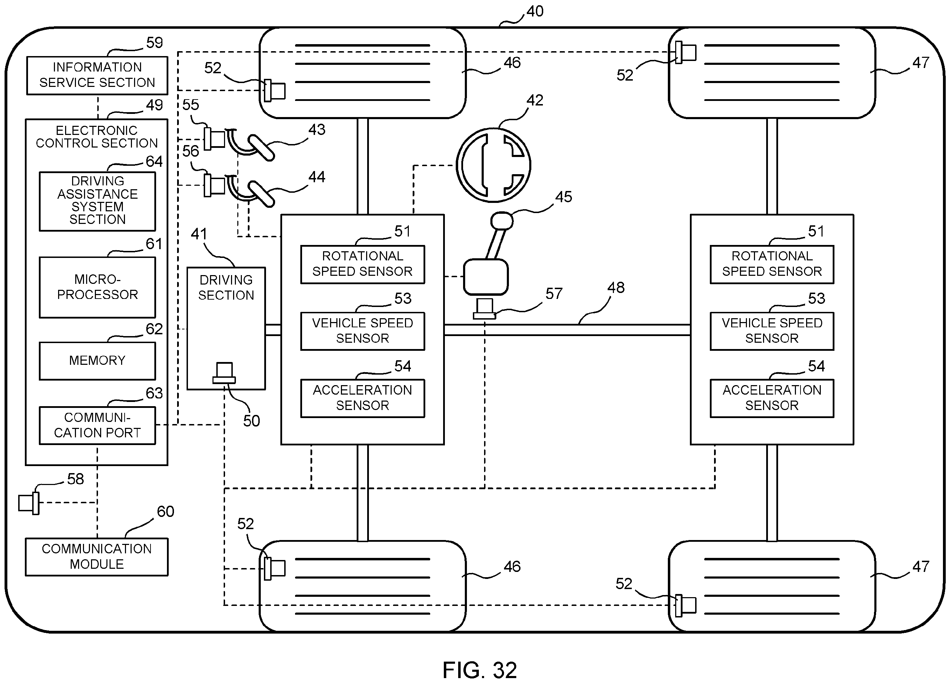

FIG. 32 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that controls, when the terminal includes eight antenna ports, transmission of capability information related to at least one of antenna layout and antenna coherent for codebook-based physical uplink shared channel (PUSCH) transmission; and
a receiving section that receives a configuration related to a sounding reference signal (SRS) resource set and SRS resources, based on the capability information.

2. The terminal according to claim 1, wherein
the configuration includes a configuration indicating four SRS resource sets and 2-port SRS resources or a configuration indicating two SRS resource sets and 4-port SRS resources.

3. The terminal according to claim 1, wherein
the receiving section receives downlink control information (DCI) including a same number of SRS resource indicator fields as the number of the SRS resource sets.

4. The terminal according to claim 1, wherein
the receiving section receives downlink control information (DCI) including at least one of the number of the SRS resource sets, indices of the SRS resource sets, and an order of the resource sets.

5. A radio communication method for a terminal, the radio communication method comprising:
controlling, when a terminal includes eight antenna ports, transmission of capability information related to at least one of antenna layout and antenna coherent for codebook-based physical uplink shared channel (PUSCH) transmission; and
receiving a configuration related to a sounding reference signal (SRS) resource set and SRS resources, based on the capability information.

6. A base station comprising:
a control section that controls, when a terminal includes eight antenna ports, reception of capability information related to at least one of antenna layout and antenna coherent for codebook-based physical uplink shared channel (PUSCH) transmission; and
a transmitting section that transmits a configuration related to a sounding reference signal (SRS) resource set and SRS resources, based on the capability information.
